# EUROPEAN PATENT APPLICATION

(11) **EP 3 657 465 A1**
(43) Date of publication of application: **27.05.2020**
(21) Application number: 18834796.7
(22) Date of filing: 06.07.2018
(51) Int. Cl.: G08G 1/16, B60W 50/16

(54) **VEHICLE CONTROL DEVICE AND VEHICLE CONTROL METHOD**

(30) Priority: 21.07.2017 JP 2017141553
(71) Applicant: Sony Semiconductor Solutions Corporation, Atsugi-shi, Kanagawa 243-0014 (JP)
(72) Inventor: OBA Eiji, Atsugi-shi Kanagawa 243-0014 (JP)
(74) Representative: Witte, Weller & Partner Patentanwälte mbB
(86) International application number: PCT/JP2018/025655
(87) International publication number: WO 2019/017216

(57) **Abstract**

The present technique relates to a vehicle controller and a vehicle control method capable of changing from autonomous driving to manual driving more safely.

The vehicle controller includes a running control section exercising control over deviating running from normal running of a vehicle at a time of switching a driving mode from an autonomous driving mode to a manual driving mode; and a driving state detection section detecting a reactivity and a degree of awakening of a driver on the basis of a running operation performed by the driver on the control over the deviating running. A detected reactivity and a detected awake state of the driver are used at a time of switching the driving mode from the autonomous driving mode to the manual driving mode by the driver. The present technique is applicable to, for example, a vehicle controller that controls autonomous driving.

## Description

### [Technical Field]

The present technique relates to a vehicle controller and a vehicle control method and particularly relates to a vehicle controller and a vehicle control method capable of changing from autonomous driving to manual driving more safely.

### [Background Art]

Conventionally, it has been proposed to determine whether a postural imbalance of a driver is attributed to a driver's habit and to inform the driver of the postural imbalance in different manners between a case in which the postural imbalance is determined to be attributed to the habit and a case in which the postural imbalance is determined to be attributed to a matter other than the habit (refer to, for example, PTL 1).

Conventionally, it is also proposed to determine whether a driver has a driving ability to be capable of returning to manual driving from autonomous driving before a vehicle starts to run by the autonomous driving, and to prohibit the vehicle from starting to run by the autonomous driving in the case of determining that the driver is lacking in such a driving ability (refer to, for example, PTL 2).

### [Citation List]

### [Patent Literature]

[PTL 1]
   Japanese Patent Laid-Open No. 2016-38793
[PTL 2]
   Japanese Patent Laid-Open No. 2016-115356

### [Summary]

### [Technical Problem]

Meanwhile, it is necessary to smoothly execute switching from autonomous driving to manual driving. To meet the need, PTL 2, for example, mentions stopping the vehicle in an emergency in the case of an unsuccessful change to the manual driving at a time of completion of the autonomous driving.

However, the unsuccessful change causes traffic congestion in a heavily trafficked location unless an evacuation area where the vehicle failing to change a driving mode is temporarily parked is provided and guide the vehicle to the area.

The present technique has been achieved in the light of such circumstances, and an object of the present technique is to enable a driving mode to be more safely changed from autonomous driving to manual driving.

### [Solution to Problem]

A vehicle controller according to one aspect of the present technique includes: a running control section exercising control over deviating running from normal running of a vehicle at a time of switching a driving mode from an autonomous driving mode to a manual driving mode; and a driving state detection section detecting a driving state of a driver on the basis of a running operation performed by the driver on the control over the deviating running.

The vehicle controller can further include a driving mode switching section switching the driving mode in response to the driving state detected by the driving state detection section.

The driving mode switching section can switch the driving mode from the autonomous driving mode to the manual driving mode in a case in which the driving state detected by the driving state detection section represents that the normal running is possible.

The running control section can exercise the control over the deviating running as a final step or a process conformant to the final step among a plurality of determination processes performed stepwise at the time of switching the driving mode.

The running control section can exercise control over running to move the vehicle to a direction deviating from a traveling direction as the control over the deviating running.

The running control section can exercise control over running to move the vehicle to a right angle direction as the deviating direction.

The running control section can exercise control over running to quickly accelerate or decelerate the vehicle as the control over the deviating running.

The running control section can exercise the control over the deviating running after the driver is notified that the driving mode is switched.

The driving state detection section can passively detect the driving state of the driver before the running control section exercises the control over the deviating running.

The driving state detection section can passively or quasi-passively detect the driving state of the driver before the running control section exercises the control over the deviating running, and the running control section can determine timing of notifying the driver on the basis of a state of the driver and return prediction timing.

The driving state detection section can detect the driving state on the basis of a correction action performed on a running operating device by the driver.

The driving state detection section can detect, as the driving state, at least one of a reactivity or a degree of awakening of the driver.

The running control section can permit the autonomous driving mode of the vehicle with a speed limited to a low speed, determine whether to switch the driving mode from autonomous driving to manual driving at a time of switchover to running at a speed equal to or higher than a predetermined speed, and request the driver to intervene in steering operation at a time of running at the speed equal to or higher than the predetermined speed.

A vehicle control method according to one aspect of the present technique includes the steps of: exercising control over deviating running from normal running of a vehicle at a time of switching a driving mode from an autonomous driving mode to a manual driving mode; and detecting a driving state of a driver on the basis of a running operation performed by the driver on the control over the deviating running.

According to one aspect of the present technique, control is exercised over deviating running from normal running of a vehicle at a time of switching a driving mode from an autonomous driving mode to a manual driving mode. Furthermore, a driving state of a driver is detected on the basis of a running operation performed by the driver on the control over the deviating running.

### [Advantageous Effect of Invention]

According to one aspect of the present technique, it is possible to more safely change from autonomous driving to manual driving.

It is noted that advantages are not always limited to those described in this section but may be any of those described in the present disclosure.

### [Brief Description of Drawings]

[FIG. 1]

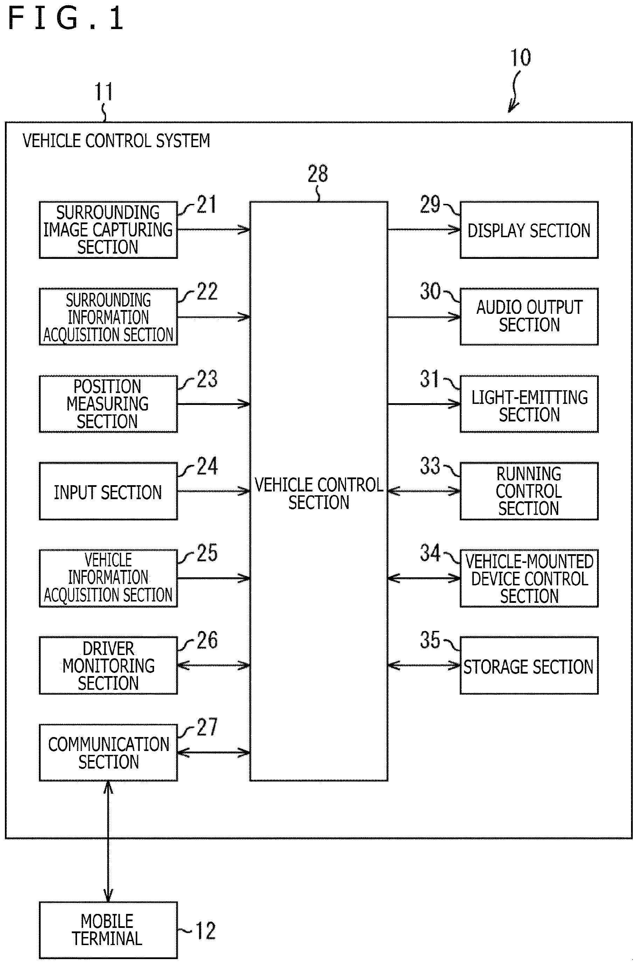

   FIG. 1 is a block diagram depicting an example of a configuration of an autonomous driving system to which the present technique is applied.
[FIG. 2]

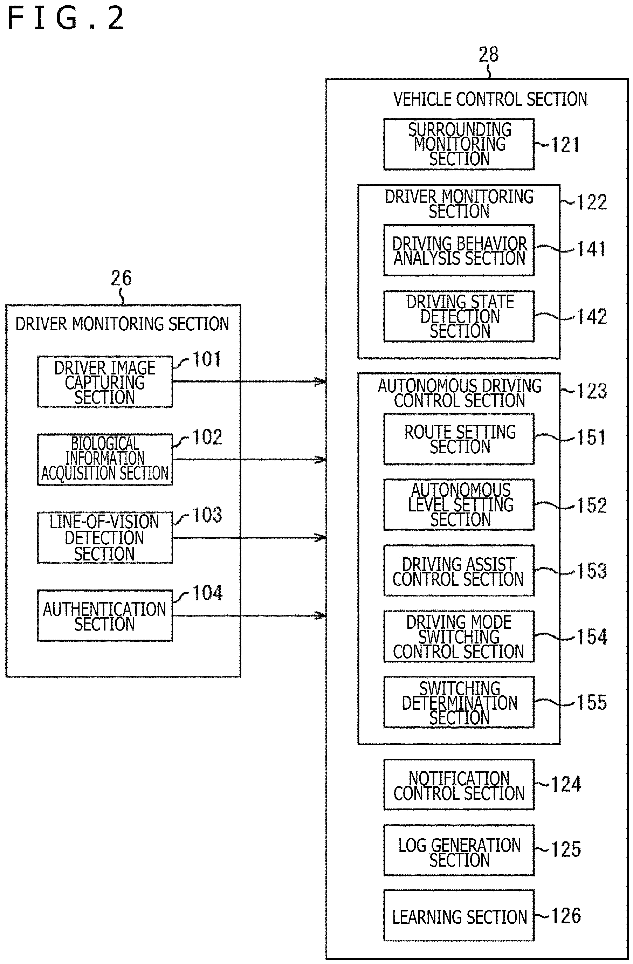

   FIG. 2 is a block diagram depicting an example of configurations of a driver monitoring section and a vehicle control section.
[FIG. 3]

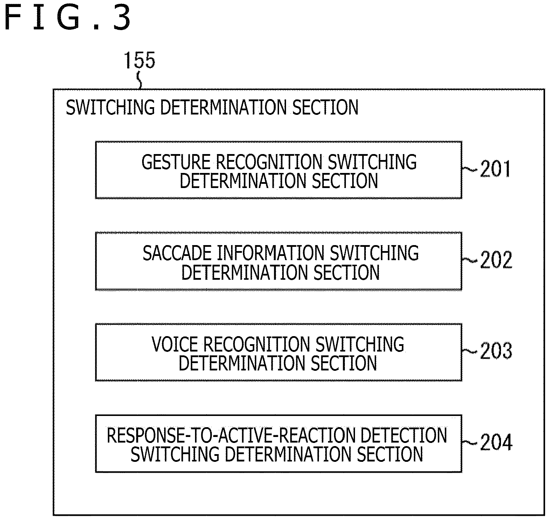

   FIG. 3 is a diagram depicting an example of a configuration of a switching determination section.
[FIG. 4]

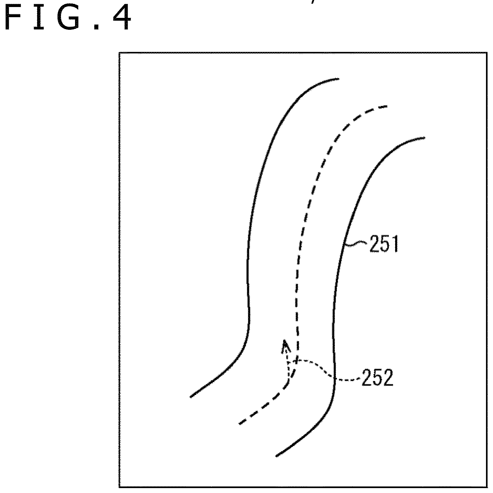

   FIG. 4 is an explanatory diagram of a switching determination by response-to-active-reaction detection.
[FIG. 5]

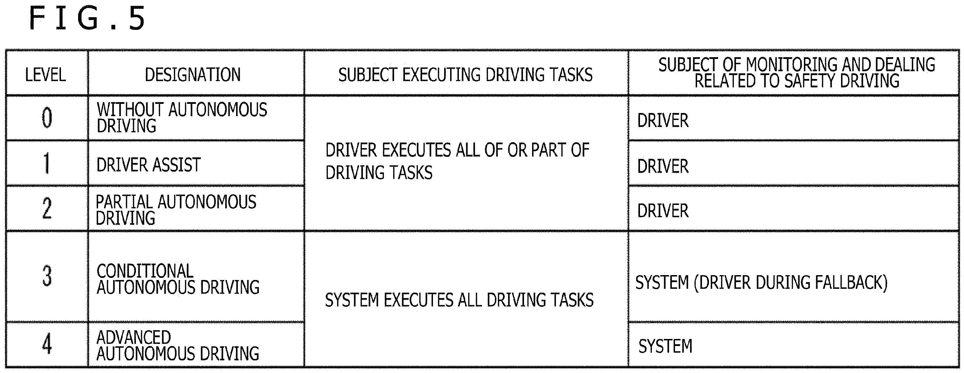

   FIG. 5 is an explanatory diagram of autonomous levels.
[FIG. 6]

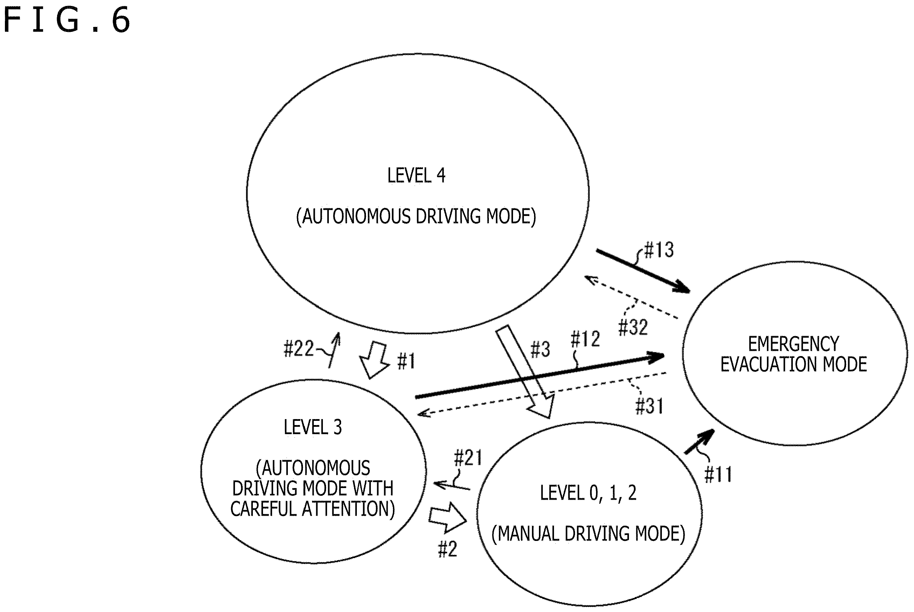

   FIG. 6 is a transition diagram depicting driving mode switching.
[FIG. 7]

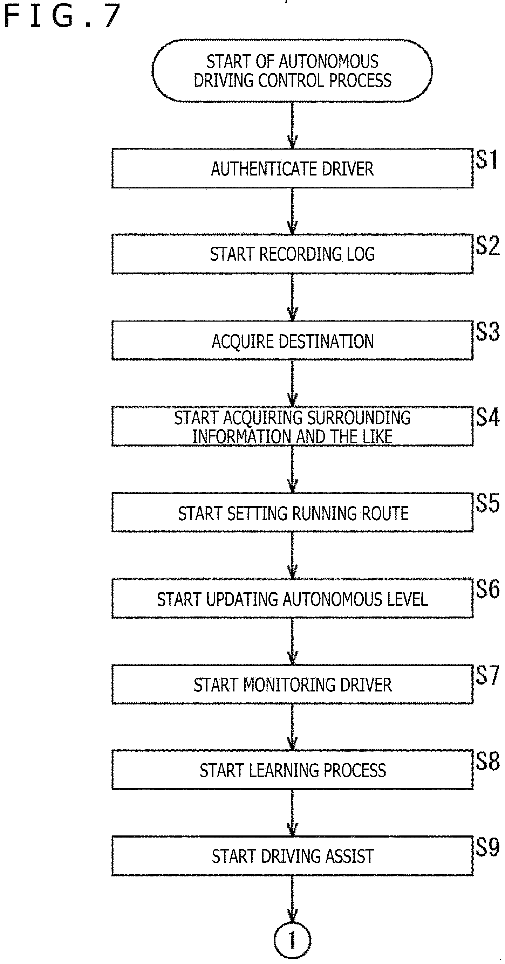

   FIG. 7 is an explanatory flowchart of an autonomous driving control process.
[FIG. 8]

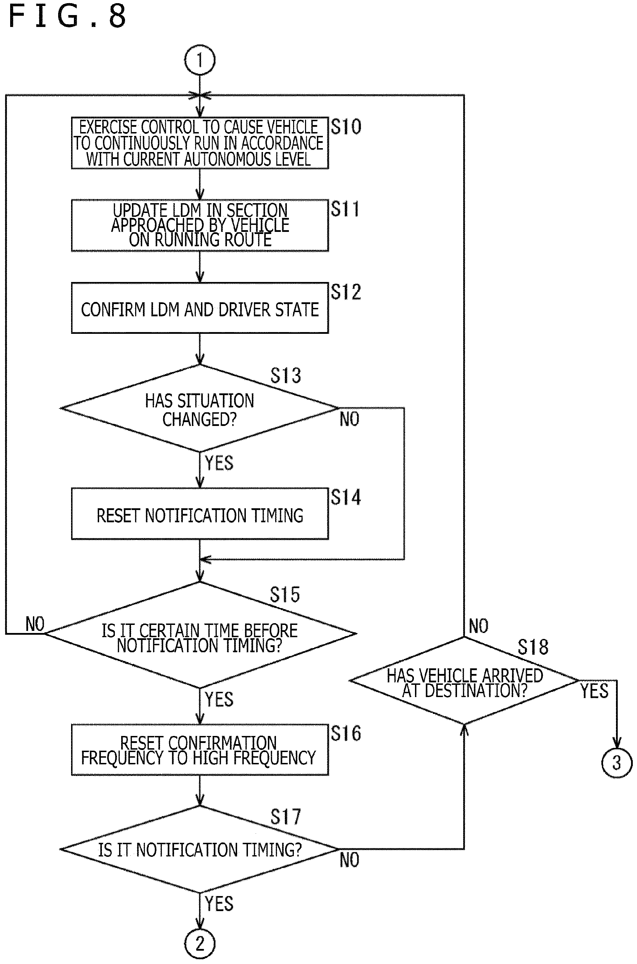

   FIG. 8 is an explanatory flowchart subsequent to FIG. 7 of the autonomous driving control process.
[FIG. 9]

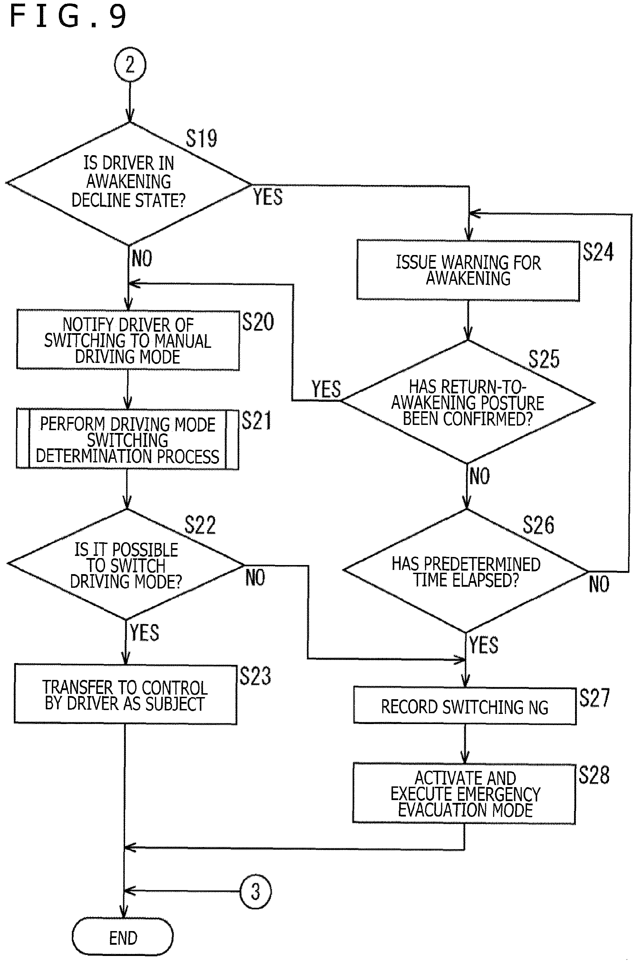

   FIG. 9 is an explanatory flowchart subsequent to FIG. 8 of the autonomous driving control process.
[FIG. 10]

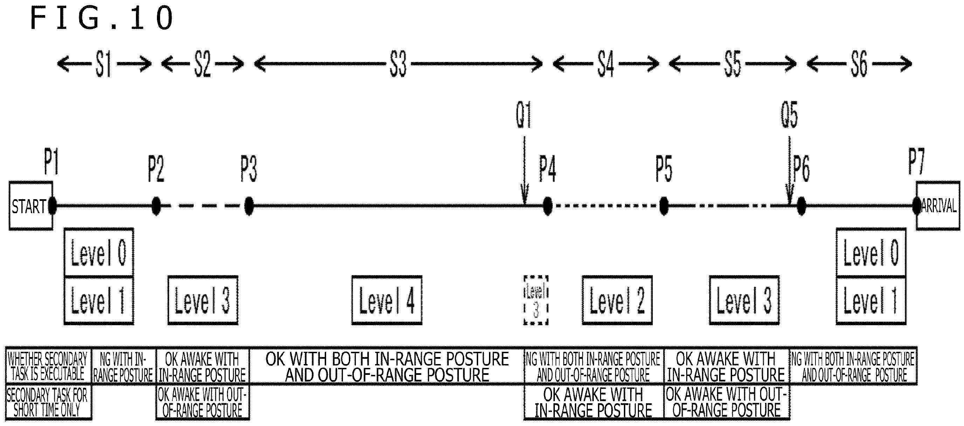

   FIG. 10 is an explanatory diagram of LDM data update.
[FIG. 11]

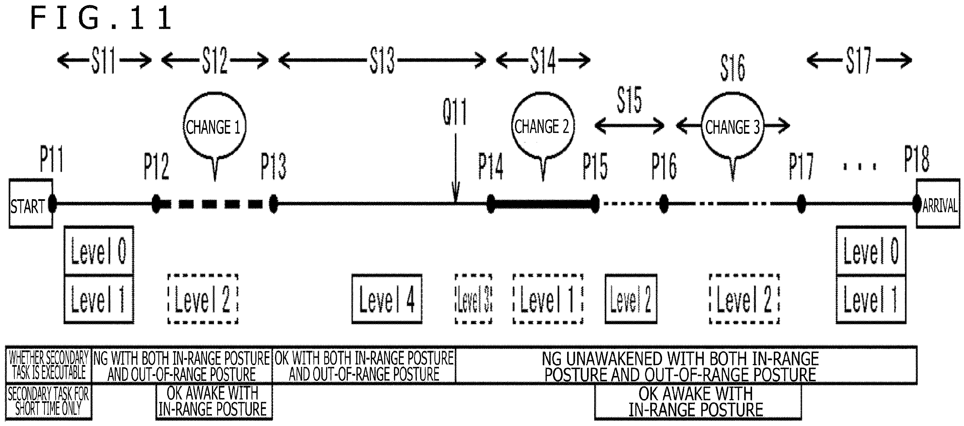

   FIG. 11 is an explanatory diagram of the LDM data update.
[FIG. 12]

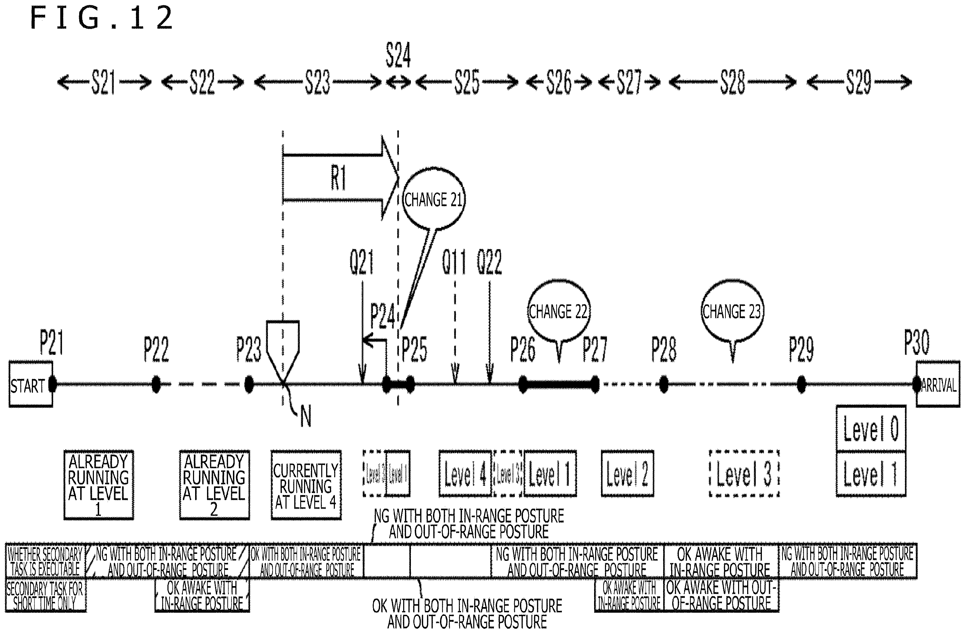

   FIG. 12 is an explanatory diagram of the LDM data update.
[FIG. 13]

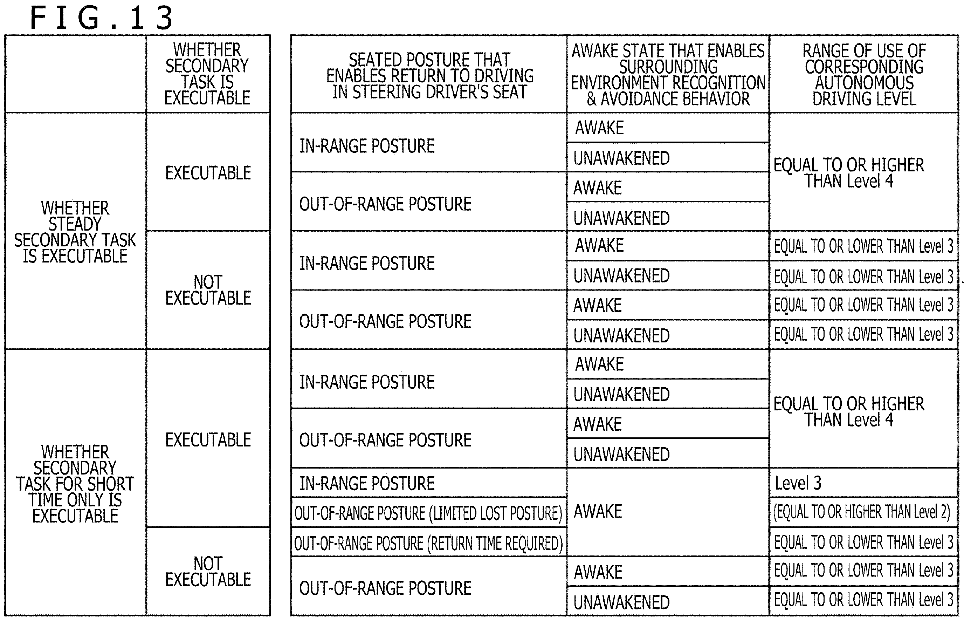

   FIG. 13 is a diagram depicting a table of summarizing answers to whether a secondary task is executable.
[FIG. 14]

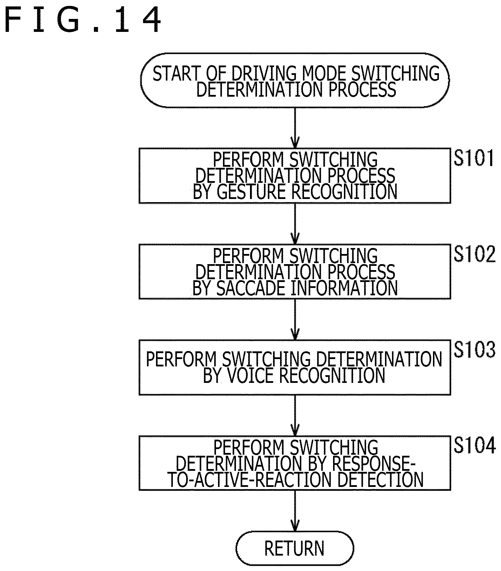

   FIG. 14 is an explanatory flowchart of a driving mode switching determination process.
[FIG. 15]

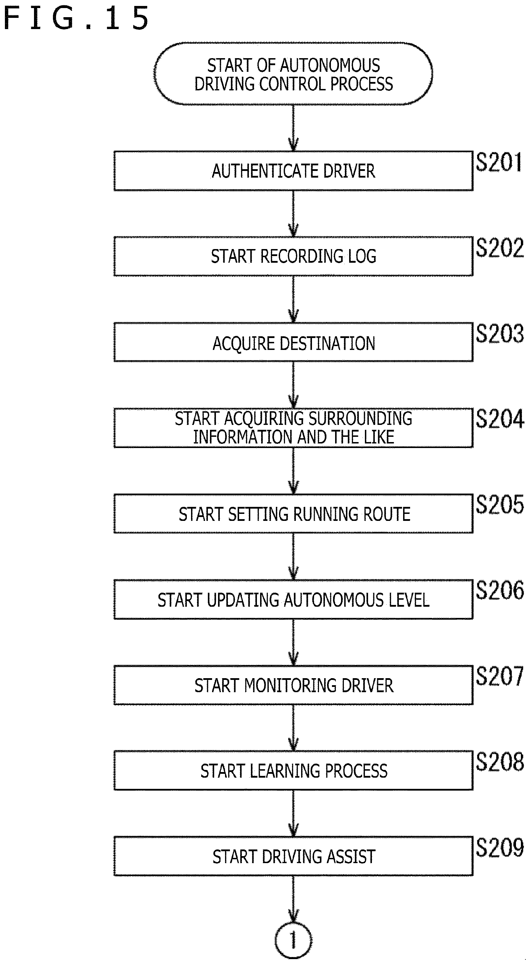

   FIG. 15 is an explanatory flowchart of another example of the autonomous driving control process.
[FIG. 16]

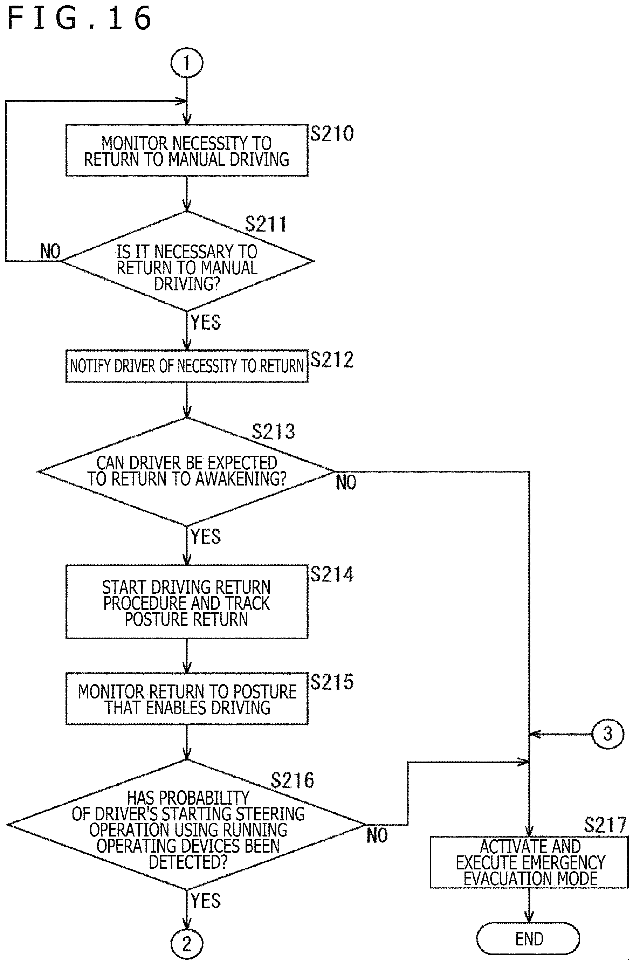

   FIG. 16 is an explanatory flowchart subsequent to FIG. 15 of another example of the autonomous driving control process.
[FIG. 17]

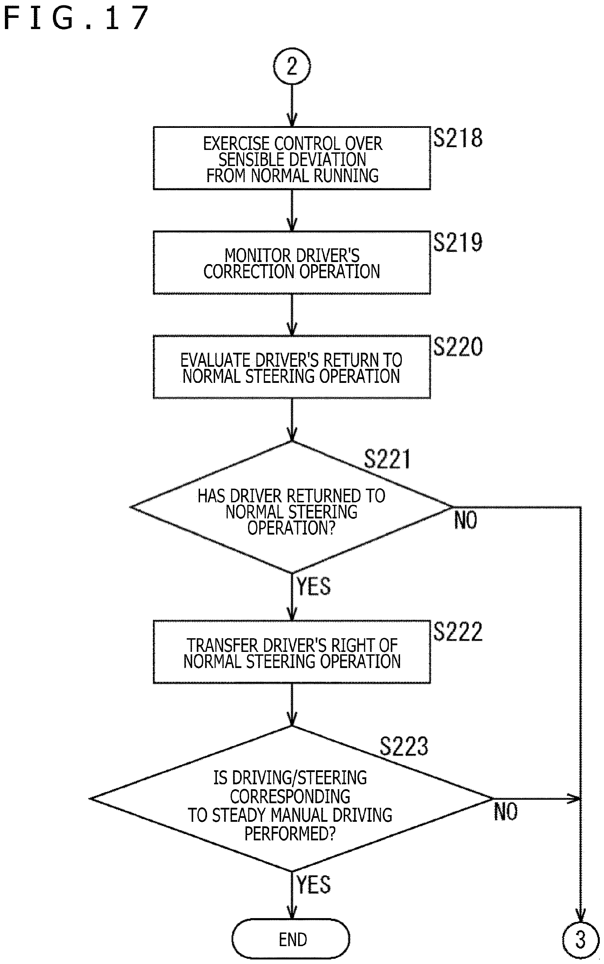

   FIG. 17 is an explanatory flowchart subsequent to FIG. 16 of another example of the autonomous driving control process.
[FIG. 18]

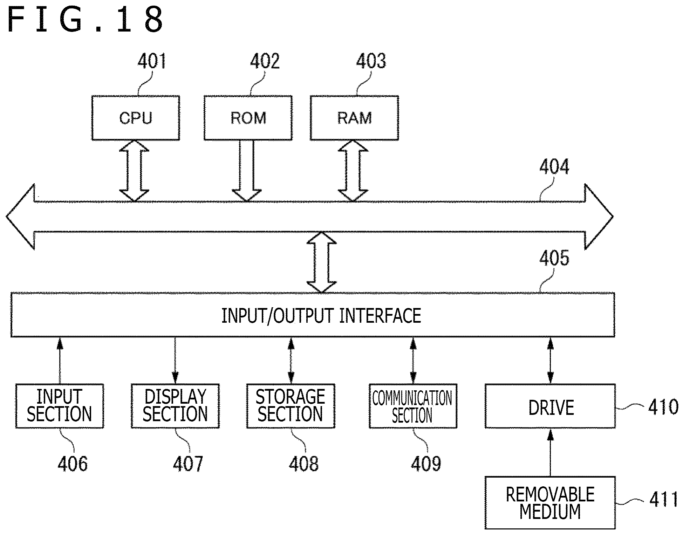

   FIG. 18 is a diagram depicting an example of a configuration of a computer.

### [Description of Embodiments]

Modes for carrying out the invention (hereinafter, described as "embodiments") will be described hereinafter in detail with reference to the drawings.

### <Example of configuration of autonomous driving system>

FIG. 1 depicts an example of a configuration of an autonomous driving system 10 to which the present technique is applied.

The autonomous driving system 10 includes a vehicle control system 11 and a mobile terminal 12.

The vehicle control system 11 includes a surrounding image capturing section 21, a surrounding information acquisition section 22, a position measuring section 23, an input section 24, a vehicle information acquisition section 25, a driver monitoring section 26, a communication section 27, a vehicle control section 28, a display section 29, an audio output section 30, a light-emitting section 31, a running control section 33, a vehicle-mounted device control section 34, and a storage section 35.

The surrounding image capturing section 21 includes, for example, various kinds of imaging devices such as a mono camera, a stereo camera, a ToF (Time of Flight) camera, a polarization camera, a time gated camera, a multispectral camera, a non-visible light camera such as an infrared light camera. The surrounding image capturing section 21 captures images of surroundings of a vehicle including a traveling direction of the vehicle, and supplies the images obtained by capturing to the vehicle control section 28 as surrounding images.

The surrounding information acquisition section 22 includes various kinds of sensors such as a sonar, a radar, a lidar, a temperature sensor, a humidity sensor, a rain sensor, a snow sensor, and a backlight sensor. The surrounding information acquisition section 22 acquires surrounding information that is information about surroundings of the vehicle. Furthermore, the surrounding information acquisition section 22 may obtain information about blind spots that cannot be obtained only be measurement by the subject vehicle by acquiring information from a roadside, running vehicles running in the vicinity of the subject vehicle, pedestrians, bicycles, and the like.

For example, the surrounding information acquisition section 22 acquires, as the surrounding information, information associated with a surrounding environment of the vehicle such as a temperature, a humidity, weather, and a road surface condition, information associated with objects surrounding the vehicle such as types and positions of the objects surrounding the vehicle, and the like. The surrounding information acquisition section 22 supplies the acquired surrounding information to the vehicle control section 28.

The position measuring section 23 measures a current position of the vehicle using a positioning system that is a combination of, for example, a satellite navigation system such as a GNSS (Global Navigation Satellite System) which measures a current position by using an artificial satellite, an autonomous positioning system typified by SLAM (Simultaneous Localization and Mapping) by an altimeter, an acceleration sensor, a gyroscope, or an image recognition device, and the like. The position measuring section 23 supplies a measurement result to the vehicle control section 28.

The input section 24 includes input devices such as a microphone, a button, a switch, a touch panel, a direction indicator, and a gesture recognition device. The input section 24 receives inputs of an instruction by a vehicle including a driver, data, and the like. The input section 24 supplies the input instruction, data, and the like to the vehicle control section 28.

The vehicle information acquisition section 25 acquires vehicle information including various kinds of information associated with the vehicle. For example, the vehicle information acquisition section 25 acquires, as the vehicle information, information associated with motions of the vehicle such as a speed, an acceleration, an angular speed, and a traveling direction of the vehicle.

Furthermore, the vehicle information acquisition section 25 acquires, for example, information associated with driving operations such as operation timing, operation amounts, and the like with respect to an accelerator pedal, a brake pedal, a steering wheel, a parking brake, a shift lever, a direction indication lever, a power (ignition) switch, a lamp switch, a windshield wiper switch, and the like.

Moreover, the vehicle information acquisition section 25 acquires information associated with a vehicle condition such as states of constituent sections of the vehicle and presence/absence of a failure. The vehicle information acquisition section 25 supplies the acquired vehicle information to the vehicle control section 28.

As described later with reference to FIG. 2, the driver monitoring section 26 monitors the driver and supplies a monitoring result to the vehicle control section 28.

The communication section 27 includes communication devices compliant with various communication schemes.

The communication section 27 includes, for example, a communication device that holds wireless communication by DSRC (Dedicated Short Range Communications). In this case, the communication section 27 holds communication with each ITS (Intelligent Transport Systems) spot installed along a road and acquires an LDM (Local Dynamic Map) .

The LDM includes, for example, static information containing road surface information, traffic lane information, three-dimensional structure information, and the like, quasi-static information containing traffic control information changing moment by moment, prior information about road works, prior update information about the road works currently underway and indicating that the vehicle is closer to any of road work sites, wide-area weather information, and the like, quasi-dynamic information containing latest update information, traffic accident information, traffic congestion information, narrow-area weather information, and the like, and dynamic information containing information about surrounding vehicles and pedestrians, traffic light information, and the like.

Prioritizing broadband communication with more information among short-time near field communications enables effective use of wireless communication resources. This broadband communication is effective means particularly for acquiring information essential to pressing and localized running to be done by the subject vehicle soon and road environment information acquired by the subject vehicle to an infrastructure side.

In addition, the communication section 27 further includes a communication device capable of more remote communication, for example, holding communication in accordance with a communication standard (3G, 4G, LTE (Long Term Evolution), or the like) in accordance with which a cellular telephone holds communication. In this case, the communication section 27 acquires various kinds of information such as wider-area map data or weather information about distant traveling points from a server or the like by way of a dedicated or a common general-purpose network such as the Internet.

The communication section 27 includes a beacon device. In this case, the communication section 27 holds communication with each roadside machine installed on a roadside for assisting in safety driving or path planning, and acquires and exchanges various kinds of traffic information.

Environment information about an environment in which the vehicle plans to run is not necessarily limited to that obtained by these specific means. The communication section 27 may hold not only planned base station communication under next-generation cellular telephone communication standards but also vehicle-to-vehicle relay communication or proximity communication with a cloud server in the vicinity of a running section without by way of a base station. Alternatively, the communication section 27 and a communication partner may have redundancy, so that robustness can be ensured against specific communication system failures.

Environmental data update freshness on a route to which the vehicle is to travel varies depending on a band available for communication; thus, particularly in a case in which the subject vehicle enters a road section in which the degree of freshness of update such as that of the LDM or the like is considerably low, degree of freshness of information necessary for the subject vehicle to run by complete autonomous driving in the section falls. As a result, it is necessary to suppose that a driver is asked to intervene in driving to return to a normal lane in a section originally defined as a section in which the subject vehicle can run without intervention of the driver.

The communication section 27 includes a near field communication device such as a Bluetooth (registered trademark)-capable communication device available in a cabin. In this case, the communication section 27 holds communication with the mobile terminal 12 typified by a smartphone or a tablet terminal and transmits and receives various kinds of information.

The communication section 27 supplies the acquired information to the vehicle control section 28. In addition, the communication section 27 acquires information to be transmitted to the other communication device and the like from the vehicle control section 28.

The vehicle control section 28 includes an ECU (Electronic Control Unit) or the like and controls the sections in the vehicle control system 11 as described later with reference to FIG. 2.

The display section 29 includes a display device of every kind and displays various images and information under control of the vehicle control section 28. The display section 29 includes, for example, a head-up display or a transmission display provided on part of a windshield, and displays superimposed images or information within a field of vision of the driver. Furthermore, the display section 29 includes, for example, a display or the like of an instrument panel or a car navigation system.

The audio output section 30 includes, for example, a speaker, an alarm, a buzzer, and the like. The audio output section 30 outputs audio information, notification sound, alarm sound, and the like under control of the vehicle control section 28.

The light-emitting section 31 includes, for example, a light-emitting device such as an LED (Light Emitting Diode) or a lamp. The light-emitting section 31 puts on or blink the light for the purpose of notifying the driver of various information, calling attention to the driver, and the like under control of the vehicle control section 28. A point-source light of the light-emitting section 31 is not necessarily limited to the LED or the like but the light-emitting section 31 may present detailed message information and the like to the driver using monogram display via a matrix array display section on all of or part of the instrument panel.

The running control section 33 controls devices associated with vehicle running among various devices mounted in the vehicle under control of the vehicle control section 28. The running control section 33 includes, for example, an engine control device that controls actuation of an engine, a motor control device that controls actuation of a motor, a brake control device that controls actuation of a brake, and a steering control device that controls actuation of steering.

The vehicle-mounted device control section 34 controls devices other than the devices associated with vehicle running among the various devices mounted in the vehicle. For example, the vehicle-mounted device control section 34 controls an actuator that controls a slope of each seat, an actuator that vibrates the seat, an actuator that vibrates the steering wheel.

The storage section 35 stores programs and data necessary for processes performed by the vehicle control system 11. The storage section 35 stores, for example, a log related to vehicle running and the like, a face image and recognition/identification/extraction information for use in authentication of the driver, learning results of various features of the drivers, automobile inspection information, and vehicle traffic accident diagnosis information. It is noted that all the information is not always stored in the storage section 35 but information may be, for example, transmitted to a remote server or the like via the communication section 27 and stored therein.

### <Example of configurations of driver monitoring section 26 and vehicle control section 28>

FIG. 2 depicts an example of configurations of the driver monitoring section 26 and the vehicle control section 28 in the vehicle control system 11.

The driver monitoring section 26 includes a driver image capturing section 101, a biological information acquisition section 102, a line-of-vision detection section 103, an authentication section 104.

The driver image capturing section 101 includes an imaging device such as a ToF sensor, a stereo camera, a 3D camera, 3D Flash LIDAR sensor, or the like. An image capturing range of the driver image capturing section 101 includes at least an upper part of a driver's waist during driving in a driver's seat, and may be a wider range. It is noted that part of functions of the driver image capturing section 101 may be replaced by posture detection by a Seat Strain Gauge provided in the seat and detecting a body pressure.

The driver image capturing section 101 further includes high-speed image capturing means capable of pupil analysis or detailed analysis of driver's eyeballs, and the high-speed image capturing means may have a function capable of analyzing saccade or visual fixation of eyeballs and intracerebral perception reactions such as a slight movement or a drift accompanied by the visual fixation. The high-speed image capturing means refers to imaging means capable of moving images at a rate faster than a frame update rate of 60 fps (Frames per second) used in ordinary television signals and desirably imaging moving images at the rate equal to or higher than 250 fps.

The driver image capturing section 101 supplies an image obtained by image capturing to the vehicle control section 28 as a driver image. To acquire more accurate and unique information at a time of capturing the image of the driver, a dedicated light source, for example, a light source that emits Structured Light or a light source that emits light at a specific wavelength including infrared light may be used to illuminate the driver.

The biological information acquisition section 102 includes a sensor or the like detecting various biological information about the driver. The biological information acquired by the biological information acquisition section 102 includes, for example, a pulse, a pulse wave, a blood pressure, a bloodstream system, a seat body pressure, a seated posture, a brain wave, an intracerebral blood flow, an eye muscle potential, an electrocardiogram, a body temperature, a body odor, a skin temperature, breathing, a steering wheel grip reaction, a respiratory status, and alcohol by volume. The biological information acquisition section 102 supplies the acquired biological information to the vehicle control section 28. While it is difficult to directly grasp a driver's determinative wakefulness from these mainly passive biological information, the biological information has a loose correlation with a fatigue status, drowsiness, and the like of the driver. Combining the biological information with line-of-vision dynamic analysis, to be described later, enables more accurate determination of driver's wakefulness. Furthermore, these pieces of information play a complementary role in observation of a driver's active mass in a state in which the driver is in a posture other than the seated posture and in which a line of vision is difficult to detect.

The line-of-vision detection section 103 detects (performs line-of-vision detection) a direction of a driver's face, a direction of the line of vision, a blink, eyeball movements (such as a fixational eye movement, a saccade, a microsaccade, a drift, and a tremor) on the basis of the driver image. It is noted that a face detection section that performs face detection such as detection of a facial expression and detection of an opened/closed state of eyes on the basis of the driver image, and a head detection section that detects a head movement on the basis of the driver image may be provided in the line-of-vision detection section 103.

The line-of-vision detection section 103 evaluates a degree of attention of the driver to and a degree of awakening of the driver by performing line-of-vision dynamic analysis. The degree of awakening is a degree that represents a conscious state of the driver. For example, the degree of awakening higher than a predetermined threshold represents that consciousness of the driver is normal. The line-of-vision detection section 103 supplies a detection result of the line of vision and an analysis result of the degree of attention and the like to the vehicle control section 28.

Since behaviors of the line of vision include many dynamic characteristics unique to the driver, the first thing that the authentication section 104, to be described later, normally performs is to grasp the behaviors of the line of vision.

A line of vision moves to information to which the driver draws driver's attention among information about an outside world; thus, an eyeball movement of the driver himself/herself, that is, a movement characteristics of the line of vision is determined depending on what the driver views sequentially in response to a state of understanding and judgment and on a progress of cognitive judgment until the driver makes judgment with eyes turning to the information on the basis of empirical characteristics as well as physical features.

Determination whether the driver is awake by dynamic analysis of the line of vision is not necessarily made by whether the driver gazes or fixates an outside world object accurately inn a physical direction of eyeballs. Needless to say, the driver often turns the line of vision to a specific subject and fixates and focuses eyes on the specific subject in a situation in which the driver fixates eyes on the specific subject while safely stopping the vehicle, looks at a face of a person coming within the field of vision of the driver to judge who the person is, or in which looks at an advertisement display or the like and reads a content described in the signboard to make cognitive judgment of the content.

However, in a case in which the driver drives the vehicle while grasping a situation of the outside world with the ordinary running vehicle, the driver needs to make precise judgment about running out or the other unexpected event; thus, the driver rarely fixes eyes on the specific subject.

Furthermore, a subject event to which the driver pays attention is generally grasped in a surrounding visual field deviating from a central visual field of the line of vision. Particularly in that case, the surrounding visual field is a low resolution region; thus, the driver starts to move the line of vision to capture the subject by turning the central visual field to a direction of the subject for grasping a content. Eyeball movements, that is, so-called saccades are observed.

In general, once being completed with grasp of the subject event by initial eyeball movements, the driver who is awake repeats moving the line of vision to a next subject for capturing other risk factors coming in the field of vision rather than fixating eyes on the subject event to proceed with observation, without moving the line of vision and performing detailed visual fixation observation. Completion with grasp of the subject event is completion with cognition in the brain, and it is not always necessary to capture the subject in the central visual field and fixate the subject.

In other words, it can be paraphrased that part of driver's judgment activities about perception in the brain is expressed while being reflected in dynamic characteristics of driver's eye saccades or visual fixation. At a time of person's completion with judgment of information associated with a purpose, obtaining a degree of coincidence, which is equal to or higher than a certain degree, between stimulus by information grasped as visual sensation and information derived from associated memory information triggers cognitive judgment for making judgment and leads to judgment. However, in the case of not leading to judgment, the driver further transitions into an observation phase for ensuring judgment and waits for information necessary to trigger the judgment.

Cognitive activities in the brain, that is, perception and judgment start in the brain soon after the driver starts moving a line of vision as a saccade. Therefore, it does not always take long time for the perception and the judgment to end until eyes focus on a subject at timing at which the eyes approximately turn to a direction of a subject and yet the subject is captured in a central visual field.

Start of the movement of the line of vision is start of a process for turning the central visual field to the direction in an effort to make detailed judgment to supplement information since only stimulus information by kinetic vision with which the subject is captured in the peripheral visual field is not enough for discriminating a content of the subject. During the movement of the line of vision, therefore, the driver is not always finished with viewing the subject for which the driver is unable to make judgment.

In a case, for example, in which a traffic light in a blue state and a red poster column or the like present in the traveling direction come within the peripheral visibility range of the driver in an indistinguishable state, the driver needs to judge a color of the traffic light at a time of passing through a crossroad; thus, the driver starts to turn to the traffic light for judgment.

In a case in which the driver does not necessarily strictly fixate the red poster column and can complete judgment only by briefly peeking at the poster column, higher precedence is often given to confirming whether a pedestrian or a bicycle runs out if the vehicle travels without change. Furthermore, even the same driver changes in dynamic characteristics such as dynamic observation procedures due to combined factors including brightness, glare, and the like in the environment affected by driver's vision.

The line-of-vision detection section 103 performs a dynamic line-of-vision analysis in response to a driver state by learning line-of-vision dynamic characteristics unique to the driver in response to an environment in this way, thereby making it possible to estimate an awake state, and supplies a determination result of the line-of-vision dynamic analysis and an analysis result such as a degree of attention to the vehicle control section 28.

The authentication section 104 authenticates the driver on the basis of, for example, the driver image and a line-of-vision analysis image. At that time, the authentication section 104 may authenticate the driver via an iris authentication process. The authentication section 104 supplies an authentication result to the vehicle control section 28. As described above, this driver authentication process is performed first and foremost. Subsequently, the authentication result is associated with a feature unique to the driver.

The vehicle control section 28 includes a surrounding monitoring section 121, a driver monitoring section 122, an autonomous driving control section 123, a notification control section 124, a log generation section 125, and a learning section 126.

The surrounding monitoring section 121 monitors surroundings of the vehicle on the basis of surrounding images from the surrounding image capturing section 21, surrounding information from the surrounding information acquisition section 22, and various kinds of information from the communication section 27.

The driver monitoring section 122 monitors the driver on the basis of vehicle information from the vehicle information acquisition section 25, the driver image from the driver image capturing section 101, driver's biological information from the biological information acquisition section 102, the detection result by the line-of-vision detection section 103, the authentication result by the authentication section 104, a learning result by the learning section 126, and the like. The driver monitoring section 122 includes a driving behavior analysis section 141 and a driving state detection section 142.

The driving behavior analysis section 141 analyzes driver's driving behaviors (for example, features and characteristics unique to the authenticated driver such as an operation and behaviors for driving) on the basis of the driver image, the vehicle information, the learning result by the learning section 126, and the like.

The driving state detection section 142 detects a driving state on the basis of the driver image, the driver's biological information, the detection result by the line-of-vision detection section 103, the authentication result by the authentication section 104, the learning result by the learning section 126, and the like. The driving state includes a state of the authenticated driver and the driver's awake state. Detecting the driving state by a plurality of steps on the basis of the state of the authenticated driver enables the driving state detection section 142 to determine the awake state of the driver with high accuracy and in accordance with the characteristics unique to the driver by fixed learning, compared with a case of make determination using a threshold one-dimensionally determined in advance as conventionally and generally done.

The autonomous driving control section 123 controls autonomous driving. The autonomous driving control section 123 includes a route setting section 151, an autonomous level setting section 152, a driving assist control section 153, a driving mode switching control section 154, and a switching determination section 155.

The route setting section 151 corrects a current position of the vehicle measured by the position measuring section 23 on the basis of an acceleration and an angular speed of the vehicle contained in the vehicle information from the vehicle information acquisition section 25. Furthermore, the route setting section 151 sets a running route to a destination input via the input section 24 on the basis of the surrounding information from the surrounding information acquisition section 22, the LDM, map data, and map update information acquired via the communication section 27, map data stored in the storage section 35, and the like.

The autonomous level setting section 152 sets a distribution of an autonomous level per running section on the running route on the basis of the surface information from the surrounding information acquisition section 22, and the LDM, traffic information, weather information, road surface information, and the like acquired via the communication section 27. Furthermore, the autonomous level setting section 152 sets the autonomous level on the basis of the distribution of the autonomous level per route section, user setting input via the input section 24, and the like.

The autonomous level mentioned herein indicates a level of autonomous driving, that is, a degree of automation of driving. Details of the autonomous level will be described later with reference to FIG. 6.

The driving assist control section 153 controls the running control section 33 in response to the set autonomous level and assists the driver in driving the vehicle. Assist by the driving assist control section 153 realizes autonomous driving either partially or entirely. The driving assist control section 153 performs driving assist with partially restricted functions at autonomous level 2, for example, ACC (Adaptive Cruise Control), LKAS (Lane Keep Assist System), TJA (Traffic Jam Assist), and AEBS (Advanced Emergency Braking System). It is noted that the details of the autonomous level will be described later.

At autonomous level 3, the driving assist control section 153 may exercise complex multistep control including more complicated circumstantial judgment and path planning on ordinary roads such as recognition of traffic lights on roads, merge with and departure from a main line, passing of trunk line intersections, priority order control on crossroads, and vehicle control on pedestrian roads and pedestrian priority roads.

While complete autonomous driving control without driver's intervention at autonomous level 4 is described to be included in functions of this driving assist control section 153 in the present specification, the driving assist control section 153 does not assist the driver in driving but exercises control completely dedicated to autonomous driving control at the time of level 4 running in the case of strict classification of control.

Furthermore, the driving assist control section 153 may exercise more advanced and complicated control (for example, overtaking including a lane change) in running sections at autonomous level 3 or higher, or may perform driving assist by autonomous running or the like that accompanies advanced, unmanned circumstantial judgment about pedestrians and bicycles in urban areas or the like.

Moreover, with a view to ensuring moving means to districts or the like where public transportation services are not provided, socially introducing safe stop-and-go autonomous driving vehicles that can be used only at low speed can be estimated as a field of using autonomous driving vehicles although the use is in a special form. At such a time, it is estimated that a driver extends use of the vehicle to higher speed running using a driver's vehicle only in a case in which the driver can normally, manually drive the vehicle from the viewpoint of convenience. At that time, the present technique is an effective function to determine a driver's ability. It is noted that this special use form is different from a normal use form of the vehicle in an emergency evacuation mode.

While a vehicle that can safely run in all speed ranges by autonomous driving needs expensive equipment, the autonomous driving vehicle can be realized with less expensive equipment as long as functions of the vehicle are limited to those for low-speed, stop-and-go driving. The present technique may be applied to a special use form, for example, in which mobility vulnerable individuals can use the vehicle as a substitute for a light vehicle in a local depopulated area or the like.

Driving modes, which include an autonomous driving mode which corresponds to a so-called autonomous level 4 or higher and in which unmanned normal running can be done, an autonomous driving mode which corresponds to an autonomous level 3 and in which the driver can intervene in driving to return to manual driving as appropriate, a manual driving mode which corresponds to an autonomous level 2 or lower and in which the driver is mainly responsible for control and judgment, and the emergency evacuation mode, are set in the vehicle control system 11.

The autonomous driving modes are modes realized by driving assist of the driving assist control section 153.

The manual driving mode is a mode in which the driver is mainly responsible for driving. The emergency evacuation mode is a mode in which the vehicle is evacuated to a predetermined location in an emergency.

The emergency evacuation mode is used in a case, for example, in which the driver is unable to drive the vehicle due to sickness or injury during manual driving (the manual driving mode), or in which it cannot be confirmed whether the driver is awake at a time of switching from the automatic driving (autonomous driving mode) to the manual driving.

While the emergency evacuation mode is defined as means for moving the vehicle by reducing a priority of a moving speed in the present specification, the driving mode may be set to the emergency evacuation mode in which the vehicle is evacuated to an emergency escape ramp as measures in an emergency since the driver is unable to change the autonomous driving to manual driving during use. In context of the present specification, there is no distinction between the emergency evacuation mode for the emergency escape ramp and moving priority means (enabling a mobility vulnerable individual to move even at a safe, very slow speed) at a time of using the vehicle as means for ensuring that the mobility vulnerable individual without public transportation means and living in a secluded place can move to a hospital or the like in an emergency.

The driving mode switching control section 154 changes a confirmation frequency of confirming the LDM, the traffic information, and the like on the basis of the LDM acquired via the communication section 27, latest update information about the LDM, the weather information, the road surface condition, the traffic information, and the like.

Furthermore, the driving mode switching control section 154 monitors necessity to switch from the autonomous driving mode to the manual driving mode (that is, necessity to return to manual driving), and notifies the driver of a request to return to the manual driving or notifies the driver of a warning during running in the autonomous driving mode in the case of the necessity. At this time, the driving mode switching control section 154 controls the switching determination section 155 to make switching determination in response to the detected state of the driver. The driving mode switching control section 154 executes a switch process for switching the autonomous driving mode to the manual driving mode on the basis of a determination result by the switching determination section 155.

It is noted that the driving mode switching control section 154 does not necessarily discriminate reliably that the driver is notified of the request or the warning and grasps the state in a situation in which there is no need to urgently change the driving mode. For example, in a case in which the vehicle continues to run for approximately one hour by autonomous driving and then needs to return to the manual driving, the driving mode switching control section 154 may simply notify the driver of the necessity at early timing when detecting a circumferential change and does not necessarily confirm that the driver accurately recognizes a content of the notification or confirm whether the driver grasps the notification. However, in a situation in which urgent change is several minutes away, a failure to recognize the notification can be fatal. It is, therefore, necessary to confirm whether the driver recognizes the notification for ensure driver's recognition.

Nevertheless, it is desirable that the driver recognizes the notification by timing predicted by an optimum notification timing estimator, which is not depicted. Therefore, in a case in which it is estimated, for example, that the optimum notification timing is ten minutes before time of arrival at a point of change, the driving mode switching control section 154 may issue the notification to the driver and confirm whether the driver recognizes the notification. In the case of not detecting driver's recognition of the notification, the driving mode switching control section 154 may further notify the driver of the warning as an alarm.

The switching determination section 155 determines whether the driving mode is switched from the autonomous driving mode to the manual driving mode under control of the driving mode switching control section 154 on the basis of detection results of reactivity and the degree of awakening of the driver by the driving state detection section 142. The switching determination by the switching determination section 155 will be described later with reference to FIG. 3.

The notification control section 124 controls the display section 29, the audio output section 30, and the light-emitting section 31 to notify the driver of various information, warn the driver, or call driver's attention, and the like. Furthermore, the notification control section 124 may use, for example, an actuator or the like controlled by the vehicle-mounted device control section 34 to notify the driver of various information, warn the driver, or call driver's attention, and the like.

The driver may be notified by a generation source of various factors of causing the driver to feel displeasure such as a seat vibration or a steering wheel vibration to simulate rumble strip road surface running, panel information display, odor, raising a backrest, and moving a seated position by the actuator on the basis of a record of a detected driver's return behavior.

The log generation section 125 generates and updates logs for the record of the detected driver's return behavior, a record of various events occurring to the vehicle, a response to notification of surroundings at a time of changing the driving mode of the subject vehicle, and vehicle-to-vehicle/road-to-vehicle communication with a neighboring vehicle or infrastructure. The log generation section 125 stores the generated logs in the storage section 35 and updates the logs as appropriate.

The learning section 126 learns driver's driving behaviors (for example, features and characteristics unique to the driver such as the operation on driving, a return sequence, a return behavior) analyzed by the driving behavior analysis section 141, and stores a learning result.

In analyzing driver's behaviors, the learning section 126 may learn and record individual return characteristics by further adding dependence on the running environment or the like and in the light of a response specific to a condition such as the road surface condition during backlight, nighttime, or snowfall. Since the driver normally grasps own return characteristics, a mechanism for driver's offset setting of earlier notification than a recommended value in system learning to prioritize safety may be provided.

Furthermore, it is estimated that a cautious driver often attaches importance to safety and prefers to be notified at the earlier timing than the timing presented by the vehicle control system 11 as the recommended value by learning, that is, the timing presented by the vehicle control system 11. To take measures for the estimation, a mechanism such that the driver advances the notification timing by preference, that is, makes so-called earlier notification offset setting may be provided.

It is, however, undesirable that a case in which the driver is not in time for return by making setting not to advance the notification timing but to delay the notification timing. If there is a situation, even slightly, in which the driver is not in time for return and eventually late for the return, a frequency of emergency stops of the vehicle increases and a problem of triggering traffic congestion in transportation infrastructure on the premise of smooth transportation possibly occurs, which results in undesirable use form. Therefore, it is required to limit the setting that can be changed by the user as desired to setting such that the user advances the notification timing.

On the other hand, a mechanism that enables the driver to cancel the early notification in advance before the vehicle control system 11 issues a complicated notification or warning may be provided in a case in which the driver is conscious of early return by himself/herself and the return is ready at the earlier timing than the timing of which the driver is notified by learning of the vehicle control system 11.

This notification cancellation is equivalent to, for example, stopping an alarm clock before an alarm goes off. However, excessive early cancellation brings about a situation in which the driver is not careful and falls back to sleep. To avoid such a risk, cancellation of the early notification is available only to a case in which means for detecting transition of driver's return is provided and a mechanism of urging the return when the vehicle is late for procedures to return to the manual driving is provided.

### <Example of configuration of switching determination section>

FIG. 3 is a diagram depicting an example of a configuration of the switching determination section.

The switching determination section 155 includes a gesture recognition switching determination section 201, saccade information switching determination section 202, a voice recognition switching determination section 203, and a response-to-active-reaction detection switching determination section 204.

The switching determination section 155 configured in this way executes determination based on each information by a plurality of steps, and finally determines whether the driving mode can be switched from the autonomous driving mode to the manual driving mode on the basis of determination results.

Making hierarchical determination enables more reliably determination. While switching determination based only on the recognition is described in the present embodiment, a driver's state may be always monitored, a notification/warning may be issued on the basis of information about monitoring, behaviors in a dynamic posture may be analyzed, and then procedures in the present specification may be added regardless of the presence or absence of the necessity of changing.

### • Detection of reactivity and degree of awakening based on recognition of gesture motion

The gesture recognition switching determination section 201 causes the driving state detection section 142 to recognize a gesture motion and to detect a reactivity and a degree of awakening of the driver.

The gesture recognition switching determination section 201 determines whether the driving mode can be switched from the autonomous driving mode to the manual driving mode by determining a driver's return internal state on the basis of a detection result of a predetermined grasp confirmation motion after a change notification by the driving state detection section 142.

While simple finger pointing is taken as an example of the predetermined grasp motion, a repeating motion or the like may be used as a motion that requires more driver's intellectual judgment for increasing a grasp likelihood.

The return internal state means herein a conscious state of the driver. Determining the return internal state corresponds to determining whether the driver is conscious, that is, awake.

Particularly in the finger pointing motion with the driver facing forward, it is difficult for the driver to make an accurate finger pointing motion without feedback of the judgment in the brain for turning a driver's hand and fingertip to a line-of-vision range on the basis of visual information at a time of driver's looking forward. Furthermore, since an internal conscious state of the driver is reflected in a fluctuation or accuracy of the motion, it is possible to observe an active reaction (to be described later) in a brain awake state.

During the autonomous driving, the driver can perform work or an action (including a nap) other than driving as a secondary task. However, in the case of need to switch the driving mode from the autonomous driving mode to the manual driving mode, the driver needs to stop the secondary task and set the return internal state of the driver to a state of being capable of performing a driving task as a primary task.

Although not described in detail in the present specification, it is determined whether the driver has completely left the driver's conscious state such as a nap, in particular, by continuous observation of the driver state by a passive scheme and an awakening notification (such as an alarm) is issued at necessary timing to return the driver to the manual driving. The present technique is processes performed by the vehicle control system 11 to confirm whether the driver grasps this notification and to determine the degree of awakening when the driver in the driver state after the notification can apparently return to the manual driving mode.

It is determined whether the driver's return internal state is a state in which the driver can perform the driving task by detecting finger pointing and a signal or calling with the driver's looking at the front of the vehicle when the driver wakes up from the nap once. In a case in which it is possible to normally detect the finger pointing and the signal or call without wobbling, it is determined that the return internal state of the driver is the state of being capable of performing the driving task; otherwise, it is determined that the return internal state of the driver is not the state of being capable of performing the driving task. In a case in which the posture is unstable and detection is not correctly performed, a retry process or the like may be performed by re-executing the detection.

The finger pointing and the signal or call is a motion of turning one arm to a direction in which the driver is to confirm and pointing at a direction of an event to be confirmed with a finger of the raised arm, for example, made by a conductor of a train or a transit bus.

In the present embodiment, the finger pointing signal is assumed to confirm the front of the vehicle as an immediate event in a case in which the vehicle travels, and the driver raises one arm generally horizontally and confirms forward in the traveling direction as a specified confirmation procedure performed first in response to the notification of change of the driving mode.

The finger pointing signal and call with the driver's looking at the front of the vehicle will be referred to as "forward finger pointing signal and call" hereinafter, as appropriate.

The driving state detection section 142 detects the forward finger pointing signal and call of the driver as a predetermined gesture motion. The driving state detection section 142 determines whether the front of the vehicle confirmed by the driver, a position of a driver's dominant eye or each eye, and a position of finger pointing have a planar positional relation in the detected gesture motion by calculation using a combination of information from a three-dimensional sensor and a two-dimensional sensor in the driver image capturing section 101. The driving state detection section 142 thereby accurately detects and recognizes that the driver has pointed the finger forward and detects the reactivity and the degree of awakening of the driver.

It is noted that the gesture motion is often affected by a habit, youthfulness, and the like of the driver himself/herself. The driving state detection section 142 detects the forward finger pointing signal and call in light of an analysis result of the driver's driving behavior by the driving behavior analysis section 141, the learning result by the learning section 126 using the analysis result, and the like.

In this way, the driving state detection section 142 detects the driver state by detecting the gesture motion on the basis of the driver image, the driver's biological information, the line-of-vision detection result, the analysis result of the driver's driving behavior, the authentication result of the driver, the learning result by the learning section 126, and the like.

Furthermore, the gesture recognition switching determination section 201 may perform driving posture return sequence tracking detection that is an operation for tracking and detecting a sequence until the driver's posture returns to a state in which the driver can drive the vehicle depending on whether the driver is seated during the secondary task. The gesture recognition switching determination section 201 may further detect the reactivity and the degree of awakening of the driver by performing driver's eyeball behaviors, and determine whether a driver's ability to return to the manual driving is restored.

The gesture recognition switching determination section 201 may determine the motion of the driver's forward finger pointing signal and call by using a combination of the line of vision, the position of the dominant eye or each eye, the position of the fingertip, the road in front of the vehicle, a posture tracking device such as a three-dimensional ToF sensor, and the like. The gesture recognition switching determination section 201 may further determine the accuracy of the motion from determination of the position of the fingertip.

In this way, the driver's forward finger pointing signal and call accompany the driver's judgment and action in the brain to the effect that the driver actually looks at the front of the vehicle and further points the finger to the front of the vehicle. In this way, requesting the driver to execute a predetermined motion gesture makes it possible to confirm a physical ability such as how faithfully the driver can express the forward finger pointing signal and call. As described later, in particular, observing the transition of the driver state by multiple steps enables determination as to whether the driver has been able to execute normal change to the manual driving by a combination of other means, and it is possible to adopt a mechanism for determining that the transition of a finger pointing gesture at the time of the normal change is normal on the basis of teacher data; thus, it is unnecessary to manually select, discriminate, and prepare normal transition data.

### • Detection of reactivity and degree of awakening based on saccade information

The saccade information switching determination section 202 causes the driving state detection section 142 to detect the reactivity and the degree of awakening of the driver by performing analysis of a driver's eyeball saccade behavior, analysis of a driver's microsaccade behavior, and analysis of motions reflective of and associated with a series of perception activities in the brain such as fixational eye movement and drift.

Here, in detecting judgment activities in the brain of the specific driver, reflex response characteristics include a change in individual behavior by a vision and a reflex active reaction in the brain to presence/absence of a hazard of the driver that possibly vary over time. Owing to this, it is possible to make more accurate judgment by performing learning based on persistent characteristic learning of authentication of the driver and making determination in response to behavior characteristics.

The saccade information switching determination section 202 determines the return internal state of the driver on the basis of the detection result by the driving state detection section 142, thereby determining whether the driving mode can be switched from the autonomous driving mode to the manual driving mode and determining a circumstance in the middle of awakening.

### • Detection of reactivity and degree of awakening based on voice recognition

The voice recognition switching determination section 203 causes the driver to make recognition and judgment and causes the driving state detection section 142 to detect the reactivity and the degree of awakening of the driver on the basis of a voice response of the driver.

For example, a question to which the driver is unable to react without thinking is presented as a voice, and the driving state detection section 142 detects a response to the question. The driving state detection section 142 detects the reactivity and the degree of awakening of the driver on the basis of whether the driver can respond to the question. For example, in a case in which the driver can correctly respond to the question, the driving state detection section 142 detects that the reactivity and the degree of awakening of the driver are good.

In addition, in a case in which the driver is wrong in responding to the question, the driving state detection section 142 can determine that the driver is in the middle of returning to awakening, and can re-execute determination when there is enough time before a point at which the driving mode is changed. However, in a case in which the driver does not respond at all, a risk of change increases; thus, the driving state detection section 142 may make determination based on the LDM information and the like and switch over the driving mode to the early emergency evacuation mode as described later particularly in running in a section in which the road environment is aggravated.

The voice recognition switching determination section 203 determines the return internal state of the driver on the basis of a detection result by the driving state detection section 142, thereby determining whether the driving mode can be switched from the autonomous driving mode to the manual driving mode.

### • Detection of reactivity and degree of awakening based on response-to-active-reaction detection

The response-to-active-reaction detection switching determination section 204 causes the driving state detection section 142 to detect the reactivity and the degree of awakening of the driver on the basis of a driver's response to an active reaction.

The active reaction refers herein to causing a steering wheel deviation by applying a torque that serves as a noise to the steering wheel, and intentionally generating running (hereinafter, referred to as "noise running") deviating from normal running. Examples of the noise running include running for moving the vehicle in a deviated direction such as a generally right angle direction with the vehicle kept in a generally traveling direction along a traffic lane, and running for laterally moving the vehicle to change the direction to a direction across the traffic lane, and running for intentionally applying quick acceleration/deceleration. In a case in which sidewinds are blown to the vehicle, the vehicle is moved in a direction slightly deviated laterally without changing the direction.

A response to the active reaction is a driver's response to an input active running noise, for example, driver's judgment of a torque for correcting an steering operation for such noise running and adding a torque, and stamping on an accelerator pedal or putting on the brake. The driving state detection section 142 detects, for example, that the driver can correctly carry out such a response for cancelling the applied noise.

The driver's steering operation is input using a running operating device such as the steering wheel, the accelerator pedal, or the brake. The running control section 33 exercises control to, for example, correct the steering operation in response to the driver's operation input using the running operating device.

Examples of a method of detecting the reactivity and the degree of awakening of the driver include herein passive monitoring and active monitoring.

The passive monitoring is a method of detecting the reactivity and the degree of awakening of the driver by passively observing the driver state. On the other hand, the active monitoring is a method of detecting the reactivity and the degree of awakening of the driver by applying a stimulus, an instruction, or the like by visual sensation, auditory sensation, touch sensation, or the like to the driver and observing a driver's reaction to the applied stimulus, instruction, or the like.

For example, in a circumstance in which the driver is asleep or executing the secondary task and there is no need to hurry up return, the reactivity and the degree of awakening of the driver may be detected by the passive monitoring to avoid bothering the driver. Furthermore, quasi-passive monitoring may be performed for detecting the state from analysis of a reflex response signal by irradiation of infrared light or the other electromagnetic wave signal. It is noted, however, with the complete passive scheme or the quasi-passive scheme, the driver's response and reaction are not directly observed and certainty in the detection result is poor.

While the quasi-passive scheme originally corresponds to active state observation means, the quasi-passive scheme is referred to as quasi-passive monitoring such that it is distinguished from the active scheme for the driver's reaction to the input to be described later in the present specification.

In this way, in a case in which it is difficult to detect the reactivity and the degree of awakening by the passive monitoring or for the purpose of enhancing detection accuracy, the active monitoring for observing reaction characteristics is used.

The response-to-active-reaction detection switching determination section 204 determines the return internal state of the driver on the basis of the detection result by the driving state detection section 142, thereby determining whether the driving mode can be switched from the autonomous driving mode to the manual driving mode.

It is noted that to ensure confirmation of the driver's change of the driving mode and to secure safety, it is desirable to confirm that the driver returns to a state of performing the steering operation for normal running and that a steering force and a steering operation amount have been appropriate.

Specifically, the response-to-active-reaction detection switching determination section 204 confirms a driver's locomotive ability (note that term "locomotive" is used to be applied to an ability to steer the accelerator pedal or the brake in the present specification) and a driver's steering wheel steering ability.

Moreover, the response-to-active-reaction detection switching determination section 204 confirms whether the steering operation has been performed by an appropriate amount in response to the perception and judgment.

The vehicle control system 11 is mounted in the vehicle equipped with various sensing devices for performing the autonomous driving. Therefore, a preferable steering operation condition is set in accordance with the road condition and the running environment. In a case in which the vehicle control system 11 intentionally executes running to cross the running lane or unnecessary acceleration/deceleration and the driver performs the steering operation (active steering operation reaction) for correcting such deviation, it can be estimated that the driver normally grasps the situation and has recognition and a physical steering ability necessary for the manual driving.

In the present technique, in a confirmation procedure at the time of changing the driving mode from the autonomous driving to the manual driving, the passive monitoring of the driver is performed without bothering the driver in a stage in which the driver's direct reaction is not observed because, for example, the driver is asleep, and the active monitoring described above is then performed soon after the notification timing. The vehicle control system 11 intentionally provokes a motion to slightly deviate from the normal running, thereby making it possible to confirm the return of the driver's cognitive ability and muscular ability.

The switching determination section 155 uses such a plurality of pieces of information to determine the return internal state of the driver (whether the driver is awake or the degree of awakening). In addition, the switching determination section 155 performs switching determination by detecting the response to the active reaction as a final step of the switching determination.

Performing these multistep driver's awake state discrimination enables switching of the driving mode from the autonomous driving mode to the manual driving mode more reliably and more safely. Furthermore, the same driver continuously and repeatedly executes this change operation, whereby teacher data at the time of normal change and teacher data at the time of faulty change are collected in a self-aligned fashion; thus, it is possible to improve the detection accuracy in response to a use frequency.

### <Details of switching determination by response-to-active-reaction detection>

Details of the detection of the reactivity and the degree of awakening based on the response-to-active-reaction detection will now be described.

To detect the response to the active reaction, the vehicle control system 11 may exercise control over running deviating from an ideal steering situation by intentionally adding an offset, or may add slighter noise running to the effect that the driver does not feel confused or discomfort. The detection of the response to the active reaction is performed by monitoring a driver's response such as whether the driver corrects running or whether the driver is slower to correct the running compared than at normal time.

In other words, the detection of the response to the active reaction is performed by carrying out zigzag driving or acceleration/deceleration to such an extent that the driver feels discomfort or unpleasant and monitoring whether the driver normally runs the vehicle in response to a resultant fluctuation.

It is noted that the zigzag driving also plays a role to notify a following vehicle that the preceding vehicle that is the subject vehicle is unable to change the driving mode from the autonomous driving to the manual driving. In addition, the zigzag driving plays a role to suggest to the following vehicle that there is a probability that running suddenly becomes in disorder when the following vehicle approaches the subject vehicle or the subject vehicle switches over the driving mode to the emergency evacuation mode and decelerates because of an inability to change the driving mode.

For example, in the case of leaving the vehicle laterally deviating (in the case of no steering operation for correction), it is suspected that the driver does not intervene in steering operation. The running control section 33 exercises control to avoid a risk of a rear-end collision subsequent to the zigzag driving while monitoring whether the following vehicle is approaching. In addition, the running control section 33 repeats deceleration that is not smooth deceleration but deceleration that causes the driver to slightly feel displeasure and release of braking, thereby exercising control to longitudinally shaking the driver.

On the other hand, the driver exercises acceleration throttle control for avoiding the deceleration (performs a pedal operation to avoid urgent deceleration or stopping). The driving state detection section 142 monitors the acceleration throttle control by the driver, and regards driving as being normal if the vehicle smoothly runs without deceleration.

It is noted that at a time of depressing the accelerator pedal to compensate for the deceleration, there is a risk that the driver operates the accelerator pedal in an instant in an unawakened, dreamy state.

Therefore, to activate the acceleration using the accelerator pedal may be performed after predetermined consciousness determination. In this case, the consciousness determination is performed by, for example, causing the driver to perform a pedal depressing operation in accordance with timing of lighting up a green lamp indicated forward or by causing the driver to repeat pedal depressing and non-pedal depressing in a specific pattern. In a case in which it can be confirmed that the driver is normally conscious on the basis of such consciousness determination, the running control section 33 may subsequently start linear response control in proportion to an ordinary pedal operation amount.

Such response-to-active-reaction detection will be described more specifically. It is noted that the active reaction is assumed herein detection of driver's response to the reaction using a scheme for observing a driver's reaction by applying an active action of some sort to the driver.

FIG. 4 depicts a road 251 having a gentle S-curve. A broken line generally passing through a center of the road 251 represents an ideal running route. A steering wheel operation for running on this ideal running route is assumed as "supposed steering wheel operation."

In detecting a response to the active reaction, a slight offset is added to deviate from the supposed steering wheel operation, thereby causing the driver to repeat a steering operation for correcting the offset to such an extent that the driver does not feel discomfort. In FIG. 4, a broken-line arrow 252 represents the added offset.

Repeatedly adding an offset to laterally swing the vehicle relative to the traffic lane to derail a course makes it possible to accurately determine the driver state.

### • First Modification

The active reaction is not limited to applying the offset of a type of laterally swinging the vehicle to derail the course. Longer-than-expected extension of a vehicle-to-vehicle distance to the forward vehicle may be applied as the active reaction. In detecting a response to the active reaction, it is evaluated whether the driver takes a motion to depress the accelerator pedal for correction. Alternatively, the driver state may be evaluated on the basis of detection of a frequency of blinks, detection of a state in which the driver closes eyes, detection of wobbling of the head back and forth, or the like.

In this way, as long as the vehicle is made run unnaturally within a range of ensuring safety, only deviating running of any kind or sensation of the deviating running may be applied or applied as an active reaction of the other kind.

### • Second Modification

In a case, for example, in which the driver does not operate the steering wheel, the running control section 33 causes the vehicle to zigzag for a predetermined period by changing a direction of wheels or applying left and right imbalanced braking loads to the wheels without rotating the steering wheel. In this case, the driving state detection section 142 detects the reactivity and the degree of awakening of the driver on the basis of whether the driver operates the steering wheel to correct the zigzag driving, a reaction speed, and the like.

It is noted that an amount by which the vehicle zigzags is desirably within a range within which the driver can unconsciously correct the zigzag driving.

### • Third Modification

In a case in which the vehicle is normally running, the vehicle-mounted device control section 34 a pseudo-rotational load corresponding to the case in which the vehicle zigzags to the steering wheel. In this case, the driving state detection section 142 detects the reactivity and the degree of awakening of the driver on the basis of whether the driver operates the steering wheel to stop rotation, the reaction speed, and the like.

### • Fourth Modification

In a case in which the zigzag driving continues since the driver does not react, it may be notified to an outside such as the following vehicle that an abnormality has occurred due to a reduction in the reactivity or the degree of awakening of the driver or the like, via the communication section 27 or the like.

### • Fifth Modification

The running control section 33 changes the traveling direction of the vehicle to a direction of slightly deviating from the traffic lane for a predetermined period. In a case in which the driver normally pays attention to the front, it is expected that the driver performs a steering operation for correcting the direction of the vehicle. However, unconditionally changing the traveling direction of the vehicle changes possibly causes occurrence of a hazardous state depending on a positional relation with surrounding vehicles. There is also a probability that the following vehicle is tracking the subject vehicle.

It is, therefore, desirable to detect the reactivity and the degree of awakening on the basis of the driver's response within a range of not adversely affecting the surrounding vehicles while conditions such as states of the surrounding vehicles and a psychological influence on the driver are comprehensively determined.

### • Sixth Modification

In a case in which the ACC is valid, the driving assist control section 153 sets the vehicle-to-vehicle distance to the preceding vehicle longer than normal. In this case, the driving state detection section 142 detects the reactivity and the degree of awakening of the driver on the basis of whether the driver operates the accelerator pedal to return the vehicle-to-vehicle distance to a normal distance and the reaction speed.

### • Seventh Modification

The running control section 33 sets a change amount of the traveling direction of the vehicle either larger or smaller than normal with respect to a steering amount of the steering wheel. In this case, the driving state detection section 142 detects the reactivity and the degree of awakening of the driver on the basis of whether the driver operates the steering wheel to adjust the traveling direction to a desired direction and the reaction speed.

It is noted that a difference between a normal change amount and the change amount of the traveling direction of the vehicle in this case is desirably within a range within which the driver can unconsciously correct the traveling direction.

Furthermore, while the driver's response to the reaction is observed upon exerting control to actually moving the vehicle in left and right directions in the modification, a pseudo-rotational torque may be added to the steering wheel or the drive may be guided by applying optical illusion using VR without directly adding noise to vehicle control for confirmation of the response to the active reaction as a modification. Alternatively, the response may be confirmed by causing the driver to make a specified motion such as operating the steering wheel to rotate or pushing or pulling the steering wheel back and forth in response to a specific torque response request by a voice or the like.

### • Eighth Modification

The running control section 33 sets the acceleration of the vehicle either higher or lower than normal with respect to a depressing amount of the accelerator pedal. In this case, the driving state detection section 142 detects the reactivity and the degree of awakening of the driver on the basis of whether the driver operates the accelerator pedal to adjust the vehicle speed to a desired speed and the reaction speed.

It is noted that a difference between a normal acceleration and the acceleration of the vehicle in this case is desirably within a range within which the driver can unconsciously correct the acceleration.

### • Ninth Modification

The running control section 33 sets the deceleration of the vehicle either higher or lower than normal with respect to a depressing amount of the brake pedal. In this case, the driving state detection section 142 detects the reactivity and the degree of awakening of the driver on the basis of whether the driver operates the accelerator pedal to adjust the vehicle speed to a desired speed and the reaction speed.

It is noted that a difference between a normal deceleration and the deceleration of the vehicle in this case is desirably within a range within which the driver can unconsciously correct the deceleration.

### • Tenth Modification

In a case in which the autonomous driving is performed and the driver does not need to intervene in driving, the driver can operate the mobile terminal 12 (information processing device).

While the driver is operating the mobile terminal 12, the driving state detection section 142 displays a sub-window indicating an instruction to the driver on a screen of the mobile terminal 12 via the communication section 27. In addition, the driving state detection section 142 detects the reactivity and the degree of awakening of the driver on the basis of whether the driver normally reacts to the instruction, the reaction speed, and the like.

### • Advantages

In a case, for example, in which the driver is looking at the front but consciousness of driving falls due to driver's thinking about something or the like, it is often difficult to detect the reactivity and the degree of awakening of the driver only on the basis of the passive monitoring. Using the active monitoring and performing switching determination by detecting the response to the active reaction as described above enable improvement in detection accuracy of the reactivity and the degree of awakening of the driver.

### <Example of autonomous level>

FIG. 5 depicts an example of autonomous levels. An example of autonomous levels defined by the SAE (Society of Automotive Engineers). While the autonomous driving levels defined by the SAE is referred to and used for the sake of convenience in the present specification, problems and adequacy in a case in which the autonomous driving is actually, widely used are not completely studies in the field and the autonomous driving levels are not always used in accordance with interpretation as defined. Furthermore, a use form is not necessarily a use form for guaranteeing contents described in the present specification.

The autonomous levels include five stages from level 0 to level 4.

The autonomous level 0 is referred to as a level "without autonomous driving." At the autonomous level 0, the driver is responsible for all driving tasks.

The autonomous level 1 is referred to as a "driver assist" level. At the autonomous level 1, the system in charge of the autonomous driving (hereinafter, simply referred to as "system") carries out sub-tasks in driving tasks related to either back and forth or right and left vehicle control.

The autonomous level 2 is referred to as a "partial autonomous driving" level. At the autonomous level 2, the system carries out the sub-tasks in limited driving tasks related to both back and forth and right and left vehicle control.

The autonomous level 3 is referred to as a "conditional autonomous driving" level. At the autonomous level 3, the system is responsible for all driving tasks in limited regions. It is not clear how many secondary tasks can be actually executed at this autonomous level. It is considered that the driver can perform work and actions other than driving during the driving of the vehicle, for example, such secondary tasks as an operation on the mobile terminal 12, an interactive teleconference, video watching, game playing, thinking, and a conversation with other passengers; however, there are many safety-related challenges to be addressed.

In other words, in a range of definition of this autonomous level 3, it is expected that the driver has an appropriate dealing such as driver's performing a driving operation in response to a system request or the like at a time of a preliminary dealing (during fallback) due to a system failure, deterioration of the running environment, or the like. In different wording, the driver needs to be in a state of quasi-standby to return during this time.

The autonomous level 4 is referred to as an "advanced autonomous driving" level. At the autonomous level 4, the system is responsible for all the driving tasks in limited regions. In addition, it is not expected at the autonomous level 4 that the driver has a dealing such as driver's performing driving operation or the like at the time of the preliminary dealing (during fallback). Therefore, the driver can perform, for example, the secondary tasks in a true sense while the vehicle is running, and can have a nap depending on a situation.

Therefore, from the autonomous level 0 to the autonomous level 2, the driver carries out all of or part of the driving tasks and a subject responsible for monitoring and dealing related to safety driving is the driver. At these three autonomous levels, the driver is required to have an ability to always return to driving as needed. Therefore, the driver is not permitted to be engaged in the secondary tasks other than driving that may distract attention or distract attention to the front during running.

On the other hand, at the autonomous levels 3 and 4, the system carries out all the driving tasks and the subject responsible for monitoring and dealing related to the safety driving is the system. It is noted, however, that the driver often needs to perform the driving operation at the autonomous level 3. In addition, there is a case in which sections in which the autonomous levels 3 and 4 are inapplicable are present in part of the running route. In such sections, the autonomous level is set to be equal to or lower than the autonomous level 2 at which the driver needs to intervene in driving.

Since it is difficult to grasp the degree of awakening of the driver in the case of permitting secondary tasks at the time of the autonomous driving, execution of secondary tasks remains prohibited under laws and regulations and a discussion about the execution does not proceed but stagnates. However, whether the driver executes secondary tasks is quite effective confirmation of the driver's ability to return to the manual driving in the forward finger pointing signal and call (gesture recognition) and the detection of the response to the active reaction, prospects for permission to execute secondary tasks can be sufficiently expected.

Even with the execution of secondary tasks during the autonomous driving that is the highest advantage in the autonomous driving for automobile manufacturers, it is possible to construct a mechanism for guaranteeing safety by confirming a notification at necessary timing; thus, it is highly expected that the execution is successfully permitted.

### <Driving mode switching>

It is noted that driving of the vehicle that needs to be directly affected by the driver by driver's intervention in a manner of some sort will be referred to as "manual driving," hereinafter. Therefore, at the autonomous levels 0 to 2, the manual driving is adopted. As depicted in FIG. 6, the driving mode at the autonomous levels 0 to 2 will be referred to as "manual driving mode."

On the other hand, driving that is not necessary for the driver to intervene in at all will be referred to as "autonomous/automatic driving (autonomous driving)," hereinafter. Therefore, at the autonomous levels 3 and 4, the autonomous driving is basically adopted. It is noted, however, that at the autonomous level 3, it is often necessary to adopt the manual driving in response to a system request. In other words, it is necessary to restrict the driver from quitting the driving operation at the autonomous level 3; thus, the autonomous driving is adopted with careful attention. Thus, the driving mode at the autonomous level 4 will be referred to as "autonomous driving mode," and the driving mode at the autonomous level 3 will be referred to as "autonomous driving mode with careful attention."

It is noted that the gist of the present technique is based on an ideal that use of the autonomous driving at the level 3 at which the driving mode is defined as the autonomous driving with careful attention is not ergonomically suited as the driving mode continuously used for long time. Therefore, in the autonomous driving at the level 3, the driver is required to continue a betwixt and between state in which the driver is unable to directly intervene in driving/steering operation and is unable to be completely, deeply engaged in the secondary task; thus, it may be said that it is quite painful to the driver to drive the vehicle in running sections at the level 3 depending on the use form.

Needless to say, the secondary tasks can be limited to those from which the driver can return to driving in short time. Even if the driver's use of secondary tasks at the level 3 can be limited from the practical viewpoint, the driver often, unconsciously becomes drowsy or is unknowingly, deeply engaged in the secondary task because of human biological characteristics when a situation continues monotonously.

In other words, the autonomous driving mode at the level 3 at which the autonomous driving with careful attention is performed is not a mode supposed to be continuously used for a long period of time. In a case in which it is difficult to pass through a section with the driving mode set to the autonomous driving mode or the autonomous driving mode involves risks, use of the autonomous driving mode at the level 3 is limited to use thereof when the driver is made to wait for return to the manual driving mode as a short-term backup and to use thereof in a buffer section at a time of switching the driving mode from the autonomous driving mode 4. Nevertheless, if the use of the autonomous driving mode at the level 3 is limited to, for example, use in combination with means for keeping the driver conscious and awake to be able to always return to the manual driving through driver's viewing a tablet screen or the like by operating a mobile terminal device, the driver may make steady use of the autonomous driving mode at the level 3.

The use of the autonomous driving mode at the level 3 in the buffer section involves risks that it is insufficient to confirm assurance that the driver is awake and can return to the manual driving at a time of suddenly returning the driver to driving in the manual driving mode from the autonomous driving mode 4; thus, the use is based on an idea that the autonomous driving mode at the level 3 is one in preparation for passing through the buffer section at the time of switching.

Providing a technique of the system having this mode for use in the buffer section and accurately executing the mode is intended to avoid occurrence of traffic congestion caused by many vehicles failing to change the driving mode when it is necessary to return to the manual driving in a road infrastructure environment and to ensure a healthy road infrastructure environment.

In the present technique, it is determined herein whether it is possible to switch the driving mode from the autonomous driving mode to the manual driving mode and the manual driving mode is executed as appropriate in response to the gesture recognition, the saccade information, the detection of the response to the active reaction, or the detection of the reactivity and the degree of awakening of the driver using the voice recognition.

Examples of switching from the autonomous driving mode to the manual driving mode include switching from the autonomous driving mode at the autonomous level 4 to the autonomous driving mode with careful attention at the autonomous level 3 as indicated by an outline arrow #1 of FIG. 6 since the driver intervenes in the driving operation if any in the autonomous driving mode with careful attention at the autonomous level 3.

Examples of switching from the autonomous driving mode to the manual driving mode include switching from the autonomous driving mode with careful attention at the autonomous level 3 to the manual driving mode at the autonomous level 0, 1, or 2 as indicated by an outline arrow #2 of FIG. 6.

Examples of switching from the autonomous driving mode to the manual driving mode include switching from the autonomous driving mode at the autonomous level 4 to the manual driving mode at the autonomous level 0, 1, or 2 as indicated by an outline arrow #3 of FIG. 6.

Basically, these mode transitions are limited to a case in which it is guaranteed that the driver is able to return to the manual driving at the autonomous level 4, and the driver's active steering ability is not observed (determined) just before switching. Therefore, a situation in which the driving mode is switchable is limited to a case in which the driver drives the vehicle on a road on which safety is guaranteed without involvement of a risk of a straight line at all, and in which it is possible to deal with a failure in driver's changing the driving mode using a remaining ADAS function if a failure of driver's steering ability occurs even with the LKAS, the ACC, or the like. It is also supposed that half-asleep driver's operation triggers a traffic accident if the determination whether the driver has a manual driving ability in response to a driver's request and then the change to the manual driving mode is completed, and control is exercised to cause the driver to intervene in the steering operation at an uncertain steering operation detection step.

To address the possibility, the vehicle control section 28 in charge of vehicle control sets sections in which the autonomous level 3 is adopted before the vehicle enters a section in which it is necessary to switch the driving mode from the autonomous driving mode to the manual driving mode during running, it is determined whether the driver has an ability to return to the manual driving during the setting in preparation for the entry of the vehicle in a section in which the vehicle can run and the autonomous level that is equal to or lower than the level 2 at the highest is adopted.

In a case in which it is impossible to detect the reactivity and the degree of awakening of the driver at the time of switching to the outline arrow #1, #2, or #3, the driving mode is switched over to the emergency evacuation mode as indicated by thick line arrows #11, #12, and #13. It is noted that the driving mode is switched over to this emergency evacuation mode from the manual driving mode at the autonomous level 0, 1, or 2 in an emergency such as driver's ill health.

While the emergency evacuation mode is not described in detail in the present specification, the emergency evacuation mode actually has two functions. The first function is to run and evacuate the vehicle to a safe evacuation location in an emergency in a case in which it is difficult to continue supposed normal running or to change the driving mode with the vehicle performing normal running due to a sudden change in the degree of awakening or a physical condition of the driver or the like.

The second function is to ensure moving means even in a state in which the driver has no steering ability, as means for urgently moving to a hospital or the like in a transportation vulnerable area where the driving ability is deteriorated in the first place. The second function, in particular, is the function in which the priority of the moving speed itself is reduced, and realizes one of the autonomous driving modes intended to ensure movement in a combination of remote assist, running assist in the leading vehicle, and the like.

As indicated by solid-line arrows #21 and #22 of FIG. 6, it is determined whether to execute switching from the manual driving mode at the autonomous level 0, 1, or 2 to the autonomous driving mode with careful attention at the autonomous level 3 or to the autonomous driving mode at the autonomous level 4 to respond to the driver's request on the basis of the LDM or weather on a road on which the vehicle set to run subsequently travels, event occurrence information, information about the driver's probability to return as needed, and the like.

Particularly in the switching indicated by the solid-line arrow #21, there is often a case in which the driving mode of the vehicle is returned from the manual driving to the autonomous driving without driver's grasp and the driver unconsciously, wrongly takes the autonomous driving at the time of using the vehicle. Although a probability of occurrence of this case is quite low, the driver wrongly regards the driving mode as the autonomous driving mode and performs a secondary task for a moment in the vehicle in the manual driving mode, possibly resulting in a hazardous situation with the driver distracted from driving; thus, this case is undesirable.

As indicated by the broken-line arrows #31 and #32 of FIG. 6, the driving mode is switched over from the emergency evacuation mode to the autonomous level 3 or 4 only in a special case, for example, a case of patient transportation in an emergency.

A use case supposed as a use form is considered a case in which a passenger who is unable to wait for arrival of an expressway vehicle moves to a service area on an expressway that is an intermediate point using the autonomous driving level 4 in a section in which the autonomous driving at the level 4 can be adopted. In a case in which an ordinary user transitions into the emergency evacuation mode due to a failure of change, the user returns the driving mode to the manual driving mode in a process only via a predetermined procedure such as a procedure for recording a failure of return, which is not depicted.

Enabling the driver to safely and smoothly return to the manual driving in a necessary section makes it possible to extend a route having a mixture of sections in which the autonomous driving can be adopted and those in which the manual driving is necessary. Furthermore, protecting the driver from completely quitting the intervention in the driving operation to enable safe and smooth return to the manual driving makes it possible to carry out the autonomous driving in principal sections on the running route.

Moreover, introducing a process for causing the driver to grasp the return to the autonomous driving at the time of returning from the manual driving to the autonomous driving makes it possible to prevent start to execute the secondary task due to easy assumption of "autonomous driving is underway" by the driver who is in the middle of the manual driving, and to reduce risks of careless traffic accidents caused by the assumption by the driver in the middle of the manual driving mode. Furthermore, even after the driver grasps the mode, mode display and warning of quitting from intervention in the steering operation may be additionally used so as to further prevent the assumption.

### <Autonomous driving control process>

Next, an autonomous driving control process executed by the vehicle control system 11 will be described with reference to flowcharts of FIGS. 7 to 9. It is noted that this process is started, for example, when a power (ignition) switch of the vehicle is turned on.

In Step S1, the driver monitoring section 26 authenticates the driver. Specifically, the driver image capturing section 101 in the driver monitoring section 26 captures an image of the driver. The authentication section 104 recognizes a face of the driver in the driver image obtained by capturing.

Furthermore, the authentication section 104 identifies the driver by searching a face image matching the face of the driver from face images stored in the storage section 35. The storage section 35 manages, for example, a face image of each user using a vehicle to be linked to information about the user such as identification information.

The authentication section 104 determines that authentication succeeds in the case of being capable of identifying the driver, and that authentication fails in the case of being incapable of identifying the driver. The authentication section 104 supplies an authentication result of the driver to the vehicle control section 28. Alternatively, other means such as fingerprint authentication, finger vein authentication, or iris authentication may be used as a driver authentication technique.

In the case of a failure in authenticating the driver, the driver may be prohibited from running the vehicle. In this case, the driver may be permitted to run the vehicle by performing a predetermined operation in an environment in which security is guaranteed and registering the driver as a new user.

It is noted, however, that a main purpose of authenticating the driver is to correlate features of the driving operation by the authenticated driver with the driver state and to control the vehicle in response to the correlation. It is, therefore, always necessary to use the authentication result in control over permission or prohibition of running of the vehicle. It is thereby possible to permit the driver to run the vehicle in an unauthorized state, for example, in an emergency. It is noted that the driver may notify surroundings by an indicator, vehicle-to-vehicle communication, or the like that the driver is running the vehicle in the unauthorized state.

In Step S2, the log generation section 125 starts recording a log.

In Step S3, the vehicle control section 28 acquires a destination. Specifically, a passenger (who is not necessarily the driver) of the vehicle inputs the destination to the input section 24. The input section 24 supplies information indicating the acquired destination to the vehicle control section 28.

Since the development of artificial intelligence-based voice recognition is promising in the future, interactive destination setting or running preference setting may be made.

In Step S4, the vehicle control system 11 starts acquiring the weather, events, and the like on a supposed route to the destination and in all relevant sections that may affect the running of the vehicle when the vehicle passes through the sections, and surrounding information about sections approached by the vehicle as the vehicle travels.

For example, the surrounding image capturing section 21 starts capturing images of the traveling direction and surroundings of the vehicle, and supplying surrounding images obtained by capturing to the vehicle control section 28.

The surrounding information acquisition section 22 starts acquiring the surrounding information associated with the surrounding environment, objects, and the like of the vehicle using a millimeter wave radar, a laser radar, a ToF sensor, the sonar, a rain drop sensor, an outside light sensor, a road surface condition sensor, and the like, and supplying the surrounding information to the vehicle control section 28.

The vehicle information acquisition section 25 starts acquiring the vehicle information and supplying the vehicle information to the vehicle control section 28.

The position measuring section 23 starts measuring the current position of the vehicle and supplying the measurement result to the vehicle control section 28.

The communication section 27 receives the LDM (Local Dynamic Map) from the ITS spot (not depicted) and supplying the LDM to the vehicle control section 28. In addition, the communication section 27 starts receiving the map data and the like from the server (not depicted) and supplying the map data and the like to the vehicle control section 28. It is noted that the map data may be stored in the storage section 35 in advance and the vehicle control section 28 may acquire the map data from the storage section 35.

Furthermore, the communication section 27 starts receiving the various kinds of traffic information from each roadside machine (not depicted) and supplying the traffic information to the vehicle control section 28. Acquiring latest update information from the communication section 27, in particular, makes it possible to update risk change points at which temporal changes occurred in map information acquired in advance.

It is noted that the information associated with the map such as the LDM and the map data will be generically referred to as "map information," hereinafter.

The surrounding monitoring section 121 starts monitoring the surroundings of the vehicle on the basis of the surrounding images from the surrounding image capturing section 21, the surrounding information from the surrounding information acquisition section 22, and the various kinds of information from the communication section 27.

The route setting section 151 appropriately corrects the current position of the vehicle on the basis of the acceleration, the angular speed, and the like of the vehicle contained in the information acquired from the surrounding monitoring section 121 and the vehicle information supplied from the vehicle information acquisition section 25. An estimated error in the current position of the vehicle due to, for example, information that is not reflective of the temporal change in the map information and a detection/determination error by the position measuring section 23.

In Step S5, the route setting section 151 starts setting the running route. Specifically, the route setting section 151 sets the running route from the current position or a designated position to the destination in the light of the driver's driving ability and the like on the basis of the map information. In addition, the route setting section 151 changes the running route or presents route options as needed on the basis of information such as a time zone, the weather before arrival at the destination, the traffic congestion, and traffic regulations.

In Step S6, the autonomous level setting section 152 starts updating the autonomous level.

Specifically, the autonomous level setting section 152 sets a distribution of permitted autonomous levels (hereinafter, referred to as "permitted autonomous levels") on the running route on the basis of the map information, the surrounding information, and the like.

The permitted autonomous levels refer herein to a maximum value of the autonomous levels that can be set in each intended section. For example, in the section in which the permitted autonomous level is the level 3, the vehicle can run with the autonomous level set to be equal to or lower than the autonomous level 3.

For example, the autonomous level setting section 152 sets the distribution of the permitted autonomous levels on the running route to a default value indicated by the map information and the like. In addition, the autonomous level setting section 152 updates the distribution of the permitted autonomous levels on the running route on the basis of the information associated with the running route and the surrounding information such as the weather, the road condition, traffic accidents, construction work, and traffic control obtained from the map information and the surrounding information.

The autonomous level setting section 152 lowers the permitted autonomous level from the original level 3 to the level 2 or prohibits use of the LKAS in a section in which it is difficult to recognize, for example, traffic signs such as compartment lines on the road such as road studs, paints, and curbstones on the road surface, symbols, and characters due to snow, flooding, and the like.

A condition per section after the vehicle starts running changes moment by moment depending on various situations such as a white line hidden by build-up of rainwater or reflex of backlight on the wet road surface. It is particularly necessary to notify the driver of the change of the condition that requires the driver's return to the manual driving in part of the section through which the vehicle is expected to continuously pass by the autonomous driving, and to limit execution of the secondary task in advance.

Furthermore, the autonomous level setting section 152 lowers the permitted autonomous level from the original level 3 to the level 2 or imposes a maximum speed limit in a section in which the field of vision is poor due to smoke from fire, dense fog, or the like.

Moreover, the autonomous level setting section 152 lowers the permitted autonomous level to the level 1 or 0 in a section in which a traffic accident has occurred or a falling object has been detected.

The autonomous level setting section 152 lowers a speed limit or lowers the permitted autonomous level to the level 1 or 0 in a section in which the road surface is frozen or on a bridge with high sidewinds.

The autonomous level setting section 152 updates the distribution of the permitted autonomous levels on the running route as appropriate on the basis of such limitations.

In Step S7, the vehicle control system 11 starts monitoring the driver.

Specifically, the driver image capturing section 101 in the driver monitoring section 26 starts capturing the driver image and supplying the driver image obtained by capturing to the vehicle control section 28.

The biological information acquisition section 102 starts acquiring the biological information about the driver and supplying the biological information to the vehicle control section 28.

The line-of-vision detection section 103 may be a block dedicated to eyeball analysis and starts detecting the direction of the driver's face, the direction of the line of vision, the blink, and the eyeball movements (such as fixational eye movements and the saccades) on the basis of wide-area driver images and supplying the detection results including such information to the vehicle control section 28.

The driving behavior analysis section 141 starts analyzing the driver's driving behaviors on the basis of the driver images, the vehicle information, the learning result by the learning section 126, and the like.

The driving state detection section 142 starts detecting the driver state on the basis of the driver images, the biological information about the driver, the detection result by the line-of-vision detection section 103, the authentication result by the authentication section 104, the learning result by the learning section 126, and the like.

The driving state detection section 142 starts, for example, detecting the posture, the behaviors, and the like of the driver.

Furthermore, the driving state detection section 142 detects, for example, the reactivity and the degree of awakening of the driver. The driving state detection section 142 supplies the detection result of the reactivity and the degree of awakening of the driver to the switching determination section 155.

The switching determination section 155 determines whether the driving mode is switched from the autonomous driving mode to the manual driving mode on the basis of at least one of these detection results in a case in which it is necessary to switch the driving mode from the autonomous driving mode to the manual driving mode. The switching determination section 155 performs the switching determination as to whether to switch the driving mode from the autonomous driving mode to the manual driving mode after notification of the driver of switching of the driving mode.

The reactivity of the driver is defined herein on the basis of, for example, presence/absence of a driver's reaction to an external request, an external instruction, an external stimulus, an obstacle or the like present in the traveling direction of the vehicle, the reaction speed, and accuracy of the reaction. The reactivity of the driver falls not only in the case in which the degree of awakening of the driver is low but also a case in which the driver does not focus his/her consciousness to driving, a case in which the driver does not intentionally react, and the like.

As described above, examples of the method of detecting the reactivity and the degree of awakening of the driver include the passive monitoring and the active monitoring.

In the passive monitoring, the reactivity and the degree of awakening of the driver are detected by passively observing the driver state.

In the passive monitoring, the reactivity and the degree of awakening of the driver are detected on the basis of driver movements, which are, for example, a change in the direction of the face, a change in the direction of the line of vision, a frequency of blinks, and a change in eyeball movements. For example, the movement of the line of vision, the visual fixation, and the like the with respect to the subject having correlation with the visual field information in a real space obtained by the surrounding image capturing section 21, the surrounding information acquisition section 22, and the like are observed, learned eyeball behaviors unique to the driver are referred to on the basis of the detection result, and the reactivity and the degree of awakening of the driver are detected.

The degree of awakening of the driver is detected on the basis of, for example, the biological information such as a heart rate and a body odor of the driver.

The reactivity and the degree of awakening of the driver are detected by observing chronological transitions of driver's driving operations such as steering stability and an operating speed of the steering wheel, operation stability and operating speeds of the accelerator pedal and the brake pedal. It is noted that the reaction of each driver exhibit characteristics unique to the driver; thus, the characteristics may be learned in response to the driver's situation and the reactivity and the degree of awakening of the driver may be detected on the basis of a learning result.

In the active monitoring, the reactivity and the degree of awakening of the driver are detected by applying a stimulus, an instruction, or the like by visual sensation, auditory sensation, touch sensation, or the like to the driver and observing the driver's reaction (response) to the applied stimulus, instruction, or the like.

The active monitoring is used in a case, for example, in which it is difficult to detect the reactivity and the degree of awakening of the driver by the passive monitoring or a case of enhancing detection accuracy.

At the autonomous level 3 or higher, for example, there is a case in which the interruption of the driver in the running operating device is completely interrupted. In this case, it is no longer possible to detect the driver's reaction by an operating status of the steering operation device even by monitoring the operating status of the running operating device. The active monitoring is effective means for ensuring that the driver state can be grasped even in such a case. In other words, the active monitoring has a function to complement the passive monitoring. In addition, the active monitoring is used to, for example, awaken the driver by applying a stimulus.

The reactivity and the degree of awakening of the driver may be detected after the notification of the driver of switching to the manual driving mode or at timing of a correction operation using the running operating device.

The driving state detection section 142 can detect the reactivity and the degree of awakening of the driver by controlling the display section 29 to display a short word or numbers within the field of vision of the driver and to cause the driver to read the word or numbers aloud, or to display a simple numerical formula and to cause the driver to utter a calculation result.

Moreover, the driving state detection section 142 can detect the reactivity and the degree of awakening of the driver by controlling the display section 29 to display a pseudo-target that serves as a target of the line of vision within the field of vision of the driver and tracking the movement of the line of vision of the driver.

Furthermore, the driving state detection section 142 can detect the reactivity and the degree of awakening of the driver by controlling the audio output section 30 to output a simple instruction (for example, instruction to shake the driver's head) to the driver and observing a driver's reaction to the instruction.

The driving assist control section 153 controls the running control section 33 in accordance with the instruction by the driving state detection section 142 to cause the vehicle to unnaturally run within the range within which the safety can be guaranteed. In addition, the driving state detection section 142 detects the reactivity and the degree of awakening of the driver on the basis of a driver's reaction to the unnatural running.

It is noted that the process for detecting the reactivity and the degree of awakening of the driver on the basis of the driver's reaction to the unnatural running of the vehicle is similar to the process performed by the running control section 33, the driving state detection section 142, and the driving assist control section 153 described above with respect to FIGS. 4 and the like.

It is noted that a state of a different kind such as a conscious state, a mental state, a state of tension, or an influence degree of medication may be detected instead of detecting the driver state.

In Step S8, the learning section 126 starts a learning process.

The learning section 126 can start learning the correlation between the driver's driving ability and an detectable and observable state or behavior of every kind of the driver on the basis of, for example, the analysis result of the driving behavior analysis section 141.

In addition, the learning section 126 starts learning the biological information, the driver's movement, and tendency of the driver's driving operation when the driver normally, manually drives the vehicle. For example, when the vehicle stably runs on the center of the traffic lane, is stably stopped at a stop signal, or appropriately decelerates on a curve, it is detected that the driver normally, manually drives the vehicle.

This learning is performed by persistently learning the correlation between: the characteristics unique to the driver such as the behavior of the line of vision of the driver, the posture of the head, the posture of the body, a pulse wave pattern, a respiratory condition, and a pupil reaction to outside light while the driver normally, manually drives the vehicle; and the normal driving characteristics. Using this learning result makes it possible to improve accuracy of the passive monitoring.

The learning section 126 starts learning reaction characteristics of the driver to the active monitoring such that reaction characteristics at normal time can be discriminated from that at abnormal time. Using this learning result makes it possible to improve accuracy of the active monitoring.

It is noted that in learning, an arbitrary learning method such as simple correlation learning or a complicated artificial intelligence learning using a CNN (Convolutional Neural Network).

In this way, learning the characteristics unique to the driver in response to each state makes it possible to accurately detect the driver's driving ability on the basis of the driver state (for example, a health condition or a degree of fatigue of the driver, or excessive attention or sensitive responsive reaction to a specific event because of a past experience of a traffic accident or a near miss).

The learning section 126 then stores the learning result in the storage section 35. The learning result may be not only stored in the vehicle used by the driver and reused but also may be stored in an electronic key, a remote server, or the like separately from the vehicle, so that the learning result can be used by another vehicle such as a rental vehicle. Furthermore, the learning result at time of previous use may be imported into the vehicle repeatedly used by the driver, obsolescence of the learning result may be determined, a safety margin may be added to a learning dictionary obtained by the time of the previous use, and the learning dictionary may be used as initial data at a time of determination. It is noted that learning characteristics change in response characteristics when the vehicle has not been driven for a certain period. Thus, the learning characteristics may be updated as appropriate together with a usage history, or a safety coefficient may be added to the learning characteristics in response to a period for which there is no usage history to perform the determination.

In Step S9, the driving assist control section 153 starts driving assist. In other words, the driving assist control section 153 controls the running control section 33 in accordance with the current autonomous level, thereby starting a process for driving assist such as the ACC, the LKAS, the TJA, or the AEBS as part of the running control section 33.

In Step S10 (FIG. 8), the driving assist control section 153 controls the running control section 33 in accordance with the current autonomous level, thereby controlling the vehicle to continuously run.

In Step S11, the driving mode switching control section 154 controls the communication section 27 to acquire the LDM in the section approached by the vehicle with reference to the current position of the vehicle on the running route and to update the LDM.

In Step S12, the driving mode switching control section 154 confirms the LDM and the driver state. The driver state confirmed herein includes a situation of driver's executing secondary tasks, and the reactivity and the degree of awakening of the driver. It is noted that the reactivity and the degree of awakening of the driver are confirmed on the basis of the detection result by the driving state detection section 142.

It is noted herein the autonomous level possibly changes with a change in a situation of the running route or the driver with passage of time. The driving mode switching control section 154 needs to acquire new information during running and to always continue to monitor the running route and the driver.

In an example of FIG. 10, ideal LDM data at timing of start (selecting the running route) is depicted. In FIG. 10, sections, permitted autonomous levels set in each section, and whether a steady secondary task is executable in each section and whether a secondary task is executable for short time (also referred to as "short time only") thereunder are depicted in order from the top.

The short time only indicates that the secondary tasks are limited to a content of the secondary task in a state in which the driver can quickly deal with return to the driving in a case in which the notification is issued from the notification control section 124, limiting the secondary tasks to a range that does not involve distraction in whatever use form of the secondary tasks makes it possible to guarantee the safety.

Answers to whether a secondary task is executable include states, for example, of OK in awake state with in-range posture, NG in awake state with in-range posture, OK in awake state with out-of-range posture, OK in awake state with out-of-range posture, NG in awake state with out-of-range posture, OK with both in-range posture and out-of-range posture (without dependence on degree of awakening), and NG with both in-range posture and out-of-range posture.

The section of OK in awake state with in-range posture (OK with in-range posture) is a section in which the vehicle can run in the autonomous driving mode if the seated posture of the driver is a posture within a range within which the posture is defined as a seated posture in which the driver can immediately return to the manual driving.

In other words, this section of OK in awake state with in-range posture is a section through which the vehicle can pass using the autonomous driving without problems unless unexpected circumstances occur. Therefore, it is basically possible to execute a secondary task in the section at the level equal to or higher than the level 3 in steady use, or it is operationally and conditionally possible to execute a secondary task for short time only using the autonomous driving in short time even in the section at the level 2. Whether the above definitions can be actually applicable varies depending on the characteristics of the vehicle and target safety. The secondary task executable for short time only can correspond to primary confirmation and operation of a navigation screen that may bring about forward carelessness.

The section of NG in awake state with in-range posture (NG with in-range posture) is a section in which execution of a secondary task is prohibited in the autonomous driving even if the seated posture of the driver is a posture within the range within which the posture is defined as the seated posture in which the driver can return to the manual driving.

In the section in which only the autonomous driving at down to the level 1 is permitted, the autonomous driving level is limited. In addition, in a case in which the driver operates the navigation system during running or runs the vehicle carelessly to a forward object of some sort, there is a risk involving a hazard; thus, the section is a section in which the execution of all secondary tasks involving the autonomous driving is not recommended.

The section of OK in awake state with out-of-range posture (OK with out-of-range posture) is a section in which the vehicle can run in the autonomous driving mode at the level equal to or higher than the level 3 even if the seated posture of the driver is a posture out of the range within which the posture is specified as the seated posture in which the driver can return to the manual driving, and the permitted running section at the level 3 in which a secondary task is executable temporarily for short time in the autonomous driving mode as long as an extension of time period is secured for return to seating.

It is noted, however, even with the same out-of-range posture, a task of leaving the seat and performing desk work or taking a nap makes a risk come to the surface, or a task which takes long time to return to the manual driving even if the driver is notified of return involves a risk; thus, in the section, the execution of a secondary task while steadily leaving the seat to accompany the autonomous driving is not recommended.

The section of NG in awake state with out-of-range posture (NG with out-of-range posture) is a section in which the autonomous driving is not permitted in a posture of leaving the seat even with the driver kept sufficiently awake to return to the driving in the case in which the seated posture of the driver is out of the range within which the posture is specified as the seated posture in which the driver can immediately return to the manual driving.

In other words, in the section in which the autonomous driving at the level 3 is permitted, a secondary task in the posture of steadily leaving the seat is prohibited.

The section of OK with both in-range posture and out-of-range posture is a section in which a secondary task is executable in the autonomous driving at the level corresponding to the level 4, regardless of the driver state since the update of the LDM or the like and the safety have been reliably confirmed.

It is noted, however, that even if the vehicle has an autonomous running ability at the level 4 in the section at the level correspond to the level 4, the driver is unable to be completely engaged in an arbitrary secondary task in the entire section.

The section with NG with both in-range posture and out-of-range posture is a section for which passing through a road section in the autonomous driving involves a risk and through which the vehicle needs to pass at the level 0 or 1, or is a section of the road in which the vehicle is normally permitted to run at the level 4 but in which the autonomous driving is not permitted regardless of the driver state since the update of the LDM or the like and the safety have not been confirmed for some primary reason.

It is not preferable, from the viewpoint of the certainty of executing the manual driving, to suddenly execute the manual driving at a time of switching over from the section in which the normal autonomous driving is available to the section in which the manual driving is required. Therefore, control is performed to sequentially lower the requested autonomous driving level permitted in the extension of time period before the confirmation of the manual driving is completely finished ahead of the entry of the vehicle into the section in which the permitted autonomous driving level is lowered, and to secure the running section at the switched-over level.

In other words, basically, the level 4 is not switched over to the level 2 but the level 4 is switched over to the level 3 and then to level 2 or 1.

In FIG. 10, in the LDM data at a point P1 that is a start point, the permitted autonomous level is set to the level 0 or 1 in a section S1 from the point P1 to a point P2. In addition, in the section S1, the answer to whether a secondary task is executable is set to NG with in-range posture.

The permitted autonomous level is set to the level 3 in a section S2 from the point P2 to a point P3. In addition, in the section S2, the answer to whether a secondary task is executable is set to OK in awake state with in-range posture, and the answer to whether a secondary task is executable for short time only is set to OK in awake state with out-of-range posture.

The permitted autonomous level is set to the level 4 in a section S3 from the point P3 to a point P4. In addition, in the section S3, the answer to whether a secondary task is executable is set to OK with both in-range posture and out-of-range posture.

The permitted autonomous level is set to the level 2 in a section S4 from the point P4 to a point P5. In addition, in the section S4, the answer to whether a secondary task is executable is set to NG with both the in-range posture and the out-of-range posture, and the answer to whether a secondary task is executable for short time only is set to OK in awake state with the in-range posture.

However, at a point Q1 that is an end point of the section at the level 4, it is necessary to return the driver to awakening as an extension of prior preparation for the entry of the vehicle into the subsequent autonomous driving section with an upper limit of the autonomous driving level set to the level 2. Therefore, the system inserts an inevitable section at the autonomous driving level 3 (indicated by a broken line) and proceeds with completely returning the driver to the manual driving while the vehicle is in this section.

Timing that does not involve a return delay risk is determined on the basis of the steady awake state and a steady posture state of the driver, and a safety status and the like of the road along which the vehicle plans to travel, and the change delay point Q1 is specified although the determination and the like are not described in detail in the present specification. Active confirmation of the driver's change in the present invention is performed via this running section at the level corresponding to the level 3.

In the example of FIG. 10, the permitted autonomous level is set to the level 2 in the section S4 from the point P4 to the point P5. In a case in which the level of this section S4 entirely changes to the level 3 and the level of a subsequent section S5 (section at the level 3) changes to the level 4 over time while the vehicle travels upstream, one challenge to be addressed remains, although the change are not depicted. In other words, in route sections which include the interrupted section at the level 4, the section at the level 3, and the section at the level 4 again and in which the vehicle runs, the driver is originally not required to return to intervention in the driving in condition with careful attention at the time of passing through the section at the level 3 through which the vehicle passes halfway; in this case, however, the driver's intervention in device steering operation is not performed at all.

As a result, it is difficult to determine whether the driver can return to the manual driving as needed. Therefore, a return condition at the temporary level 3 halfway along the level 4 described above may be determined while determining a driver's return ability, and an active steering reaction in temporary driving may be intentionally confirmed such that the vehicle control system 11 can grasp and detect a driver's reaction even in the section at the level 3.

With reference back to FIG. 10, the permitted autonomous level is set to the level 3 in a section S5 from the point P5 to a point P6. In addition, in the section S5, the answer to whether a secondary task is executable is set to OK in awake state with in-range posture (a secondary task is executable if the driver can return to the steadily driving and is in an awake state necessary to return to the driving), and the answer to whether a secondary task is executable for short time only is set to OK in awake state with out-of-range posture (a secondary task is executable for short time only in the awake state even if the posture of the driver is out of the range).

The permitted autonomous level is set to the level 0 or 1 in a section S6 from the point P6 to a point P7. In addition, in the section S6, the answer to whether a secondary task is executable is set to NG with both in-range posture and out-of-range posture (in the section S6, the execution of a secondary task is not permitted even with an operation on the navigation system since leaving the driving with forward care involves a risk even if the driver can immediately return to the driving and is in a sufficiently awake state). It is noted that the point P7 also serves as an arrival point.

Here, at the point P4 that is an end point of the section S3, the permitted autonomous level is switched over from the level 4 to the level 2, and the answer to whether a secondary task is executable is switched over from OK with both in-range posture and out-of-range posture to NG with both in-range posture and out-of-range posture. Furthermore, at the point P6 that is an end point of the section S5, the permitted autonomous level is switched over from the level 3 to the level 1 (level 0), and the answer to whether a secondary task is executable is switched over from OK with both in-range posture and out-of-range posture to NG with both in-range posture and out-of-range posture.

This switchover control before entry into the section is a switchover extension of time period necessary for the driver to be completed with switchover to a state required in the next entry section ahead of entry into the section. The switchover control before entry into the section is particularly important at a time of entry from the autonomous driving section into the manual driving section or the section in which the autonomous driving is permitted with careful attention.

The driving mode switching control section 154 sets the point a predetermined distance before the point at which such a permitted autonomous level and/or the answer to whether a secondary task is executable is switched over, as a planned change start point. For example, timing at which the vehicle passes through the planned change start point is timing at which the driver is notified that the driving mode is switched from the autonomous driving mode to the manual driving mode.

In other words, the driving mode switching control section 154 sets the point Q1 indicated before the point P4 that is the end point of the section S3 and the point Q5 indicated before the point P6 that is the end point of the section S5 as planned change start points. The timing at which the vehicle passes through each of the points Q1 and Q5 is the timing at which the driver is notified that the driving mode is switched from the autonomous driving mode to the manual driving mode.

Actually, there are changes in the situation as indicated by balloons of FIG. 11 after the start. Owing to this, it is often necessary to revise the planned change start points set at the time of the start (selection of the running route).

In FIG. 11, a section S11 from a point P11 to a point P12 corresponds to the section S1 from the point P1 to the point P2 in FIG. 10. In the section S11, the permitted autonomous level is the level 0 or 1, and the answer to whether a secondary task is executable is NG with out-of-range posture.

It is assumed herein that in a section S12 from the point P12 to a point P13, a demarcation between the roads becomes unclear due to snow or the like and a change to a situation possibly unsuited for the autonomous driving is generated as a change 1. In this case, in the section S12, the permitted autonomous level is changed to the level 2 (indicated by a broken line) and the answer to whether a secondary task is executable is NG with both the in-range posture and the out-of-range posture, or the answer is never OK in awake state with the in-range posture and a secondary task is no longer permitted steadily; thus, the situation is changed to a situation in which a secondary task is permitted for short time only in the awake state with the in-range posture. The section S12 in FIG. 11 corresponds to the section S2 in which the permitted autonomous level is the level 3, that is, the section S2 before the start in FIG. 10.

In the case in which the situation has changes, setting of the sections has changes as appropriate.

In the example of FIG. 11, a section S13 from the point P13 to a point P14 after end of the situation caused by the change 1 is set as a section in which the permitted autonomous level is the level 4 and the answer to whether a secondary task is executable is OK with both the in-range posture and the out-of-range posture, similarly to the section S3 of FIG. 10.

Furthermore, it is assumed herein that in a section S14 of FIG. 11 from the point P14 to a point P15, a change to a situation in which manual running is possibly necessary due to construction work or the like is generated as a change 2. In this case, in the section S14, the permitted autonomous level is changed to the level 1 (indicated by a broken line) and the answer to whether a secondary task is executable is changed to NG with both in-range posture and out-of-range posture. The section S14 of FIG. 11 is a section that includes part of a latter half of the section S3 of FIG. 10 in which the permitted autonomous level is the level 4 and part of a first half of the section S4 at the level 2 of FIG. 10.

However, at a point Q11 that is an end point of the section at the level 4, similarly to the point Q1 of FIG. 10, it is necessary to return the driver to awakening as an extension of prior preparation for the entry of the vehicle into the subsequent autonomous driving section with the upper limit of the autonomous driving level set to the level 1. Therefore, the vehicle control system 11 inserts an inevitable section at the autonomous driving level 3 (indicated by a broken line) and proceeds with completely returning the driver to the manual driving while the vehicle is in this section.

In the example of FIG. 11, a section S15 from the point P15 to a point P16 after end of the situation caused by the change 2 is set as a section in which the permitted autonomous level is the level 2 and the answer to whether a secondary task is executable is NG with both the in-range posture and the out-of-range posture, and the answer to whether a secondary task is executable for short time only is OK in awake state with the in-range posture.

It is assumed herein that in a section S16 from the point P16 to a point P17, a demarcation between the roads becomes unclear due to snow or the like and a change to a situation possibly unsuited for the autonomous driving is generated as a change 3. In this case, in the section S16, the permitted autonomous level is changed to the level 2 (indicated by a broken line) and the answer to whether a secondary task is executable is NG in unawakened state with both the in-range posture and the out-of-range posture, or the answer is never OK in awake state with the in-range posture and a secondary task is no longer permitted steadily; thus, the situation is changed to a situation in which a secondary task is permitted for short time only in the awake state with the in-range posture.

In the example of FIG. 11, a section S17 from the point P17 at which the state by the change 3 ends to a point P18 is set as a section in which the permitted autonomous level is the level 0 or 1 and the answer to whether a secondary task is executable is NG with both the in-range posture and the out-of-range posture, similarly to the section S6 of FIG. 10.

The setting of the permitted autonomous levels and the answers to whether a secondary task is executable are changed with such changes in the situation. The driving mode switching control section 154 changes the planned change start point in response to the changed setting, and changes (resets) the timing of notifying the driver that the driving mode is switched from the autonomous driving mode to the manual driving mode.

In other words, the driving mode switching control section 154 sets the point Q11 indicated before the point P14 in the section S14 as the planned change start point. The timing at which the vehicle passes through the point Q11 is the timing at which the driver is notified that the driving mode is switched from the autonomous driving mode to the manual driving mode.

In this way, the situations of the running route and the driver change moment by moment from the start of running. In an example of FIG. 12, latest LDM data at a point N after passage of certain time since the start of running is depicted. After the start of running, there are changes in the situation as indicated by balloons of FIG. 12.

In the example of FIG. 12, the vehicle is currently running from a point P23 to the point N in a section S23 from the point P23 to a point P24.

Therefore, a section S21 from a point P21 to a point P22 is a section in which the permitted autonomous level is set to level 0 or 1, and the vehicle has already run in the section S21 at the permitted autonomous level set to the level 1. The section S21 corresponds to the section S11 of FIG. 11. It is noted that the answer to whether a secondary task is executable is set to NG with both the in-range posture and the out-of-range posture in the section S21, and the vehicle has already passed through the section S21.

A section S22 subsequent to the section S21 and ranging from the point P22 to the point P23 is a section in which the permitted autonomous level is set to the level 2, and the vehicle has already run in the section S22 on the basis of such setting. The section S22 corresponds to the section S12 of FIG. 11. In the section S22, the answer to whether a secondary task is executable is set to NG with both the in-range posture and the out-of-range posture, and the answer to whether a secondary task is executable for short time only is set to OK in awake state with the in-range posture.

Next, in the section S23 in which the point N on which the vehicle is currently running and which ranges from the point P23 to the point P24, the vehicle is running at the permitted autonomous level set to the level 4. In other words, since the vehicle is running in the complete autonomous driving mode, the driving mode switching control section 154 controls the vehicle to run while acquiring update data about the latest LDM of at least a section indicated by an arrow R1. The section indicated by the arrow R1 is a planned running section a certain period ahead in which the driver can reliably return to the driving from the secondary task (state without the driver's intervention).

For example, if a shortest information acquisition section for acquiring this prior LDM information is used in a secondary task in which the driver is supposed to leave the set for a long period of time for having sleep or moving to a cargo stand, it is necessary to define at least a shortest period in which the driver can return to the driving from the secondary task with a certain margin and to continue update the shortest period. It is assumed herein that change information to the prior information is acquired by updating the section, for example, at that time.

At that time, in a case in which information about a change 21 is added by the update data about the latest LDM at the timing at which the vehicle arrives at the point N, it is possible to calculate temporary time required since grasp of the driver state until driver's return to the driving by always monitoring prediction time required since monitoring of the driver until driver's return to the driving. A level of requesting the driver to return to the intervention is updated to accompany the change 21, the permitted autonomous level is changed to the level 1 in a section S24 that is not contained in information at an initial running period or information about the points before the point N and that ranges from the point P24 to a point P25, and the answer to whether a secondary task is executable is NG with both the in-range posture and the out-of-range posture in the section.

The driving mode switching control section 154, therefore, calculates prediction timing necessary for the return, and changes a point Q21 indicated before the point P24 in the section S24 to the planned change start point.

It is noted that the prediction timing is calculated and computed in the light of characteristics based on learning of the driver's return characteristics, loading/braking dynamic characteristics of the vehicle, the safety characteristics of the road, and the like. Timing at which the vehicle passes through the point Q21 is timing of notifying the driver that the driving mode is switched from the autonomous driving mode to the manual driving mode.

Furthermore, the driving mode switching control section 154 sets the permitted autonomous level to the level 1 and the answer to whether a secondary task is executable to NG with both the in-range posture and the out-of-range posture from the point P24 to the point P25. For example, the driving mode switching control section 154 calculates the timing depending on circumstances such as early warning to the driver who falls asleep or short-time screen notification to the driver who is seated and operating a smartphone with forward attention.

In the case of temporarily switching over to the mode of driver's intervention in the driving from the level 0 to the level 3, which will not be described in detail, it is desirable to construct a mechanism that prevents seamless switchover to the higher-level autonomous driving mode for return to the driving again without driver's grasp. In addition, to return to the autonomous driving at the level 3 or 4, the vehicle control system 11 needs to have intentional input reflection means for reflecting a driver's request of return.

The driver request means refers herein to a function to prevent the driver's unconscious seamless return to the autonomous driving mode, and to prevent driver's illusion caused by driver's misunderstanding although the vehicle control system 11 does not actually return the driving mode to the autonomous driving mode. The function is provided because of a concern that the driver mistakenly assumes that the autonomous driving is continuously used during running in the section in which the system does not originally return the driving mode to the autonomous driving mode to trigger a traffic accident in the case of executing a control sequence without a function to cause the driver to grasp the return to the higher autonomous driving level.

For example, the driver mistakenly assumes that autonomous running continues even in the section in which a straight road extends, which possibly involves a risk that the driver is confused to cause a traffic accident when the vehicle subsequently travels on a curve or the like and the driver is aware of an uncontrolled state.

Next, from the point P25 to a point P26 of FIG. 12, the permitted autonomous level is set to the level 4 and the answer to whether a secondary task is executable is OK with both the in-range posture and the out-of-range posture, similarly to the section S13 from the point P13 to the point P14 in FIG. 11.

Here, if the construction work plan that is the change 2 of FIG. 11 is not updated and the plan has no change, the point Q11 is supposed to be the planned change start point in the example of FIG. 12. However, in the example of FIG. 12, a change 22 occurs from the construction work plan indicated by the change 2 from the point P14 to the point P15 in FIG. 11, construction work section information is updated, and the construction work is changed to be reduced in a section S26 from the point P26 to a point P27. In the section S26, the permitted autonomous level is the level 1 and the answer to whether a secondary task is executable is NG with both the in-range posture and the out-of-range posture.

Therefore, the driving mode switching control section 154 changes the planned change start point from the point Q11 to a point Q22 indicated before the point P26 in the section S26. Timing at which the vehicle passes through the point Q22 is timing of notifying the driver that the driving mode is switched from the autonomous driving mode to the manual driving mode.

At this time, at the point Q22 that is an end point of the section at the level 4, it is necessary to return the driver to awakening as an extension of prior preparation for the entry of the vehicle into the subsequent autonomous driving section with the upper limit of the autonomous driving level set to the level 1. Therefore, the vehicle control system 11 inserts an inevitable section at the autonomous driving level 3 (indicated by a broken line) and proceeds with completely returning the driver to the manual driving while the vehicle is in this section.

Next, in a section S27 from the point P27 to a point P28 of FIG. 12, the permitted autonomous level is the level 2 and the answer to whether a secondary task is executable is NG with both the in-range posture and the out-of-range posture, and the answer to whether a secondary task is executable for short time only is OK in awake state with the in-range posture, similarly to the section S15 from the point P15 to the point P16 in FIG. 11.

As depicted in FIG. 12, in a next section S28 from the point P28 to a point P29, there is a change 23 that weather clears up, the demarcation between the roads becomes clear, and the road environment is improved. As a result of this change 23, in the section S28 of FIG. 12, the permitted autonomous level is changed from the level 2 in FIG. 11 to the level 3, the answer to whether a secondary task is executable is changed from NG with the out-of-range posture or OK in awake state with the in-range posture to OK in awake state with the in-range posture, and the answer to whether a secondary task is executable for short time only is changed to OK in awake state with the out-of-range posture.

Furthermore, in the example of FIG. 12, in a section S29 from the point P29 at which the change 23 ends to a point P30, the permitted autonomous level is set to the level 0 or 1 and the answer to whether a secondary task is executable is set to NG with both the in-range posture and the out-of-range posture, similarly the section S29 of FIG. 12 and the section S17 of FIG. 11.

As described above, even with the same permitted autonomous level, recommended time at which the driver is requested to return to the driving (timing of notifying or warning the driver) changes moment by moment depending on the running environment, the driver state, the vehicle loading or braking characteristics, and the like at the timing (or supposed time of entry into the section). In other words, the timing of requesting the driver to return to the driving actively changes depending on the map information about the LDM, the environment information, the chronological change risk by meteorological factors such as a traffic accident, run-out, snowfall, and sidewinds, and yet the driver state.

It is noted that a speed at which the driver's consciousness returns to a state in which the normal running can be performed is represented as an eigenfunction obtained by learning using the driver's characteristics. Such an eigenfunction is expressed as a function associated with, for example, the eyeball saccade or microsaccade behavior/fixational eye movement, pupil reflex characteristics, blink characteristics, and the like.

Alternatively, the eigenfunction may be expressed as a function associated with observable information about various biological signals such as the pulse, the respiration, and the brain wave described above. These observable evaluation values are observed whenever an event of changing from the autonomous driving to the manual driving occurs, and direct correlation between subsequent stable change and a failure or delay in the change is obtained; thus, a value in the case of the normal change is used as teacher data and a performance of a determination element determining whether the driver returns to awakening from an observable value is improved depending on use of the teacher data.

FIG. 13 is a diagram depicting a table of summarizing whether a secondary task is executable.

As described above, in the seated posture that enables return to driving in steering driver's seat in the table, the "in-range posture" represents a seated posture in which the driver can return to driving in a steering driver's seat. The "out-of-range posture" represents that the seated posture is not the seated posture in which the driver can immediately return to driving in the steering driver's seat.

In the awake state that enables surrounding environment recognition and avoidance behavior in the table, "awake" represents that the driver is in the awake state that enables surrounding environment recognition and the avoidance behavior, and "unawakened" represents that the driver is not in the awake state that enables the surrounding environment recognition and the avoidance behavior.

While a typical unawakened state is a state of falling asleep, other examples of the unawakened state include a video watching state, a state of being intent on game playing, a state of holding a remote interactive teleconference in a cabin during moving, and a state of being deeply engaged in mailing or browsing. Although individual classifications are not described on purpose for avoiding complexity, it is actually, further necessary to take account for physical steering functions. For example, a so-called locomotive ability in relation to benumbed limbs due to the secondary tasks acts as a factor for determining the notification timing and determining an allowable utilization range of the autonomous driving.

Description will be made in order from the top. At the Level 4, the driver can execute a steady secondary task regardless of the in-range posture or the out-of-range posture and whether the driver is awake.

At the Level 3 or lower, the driver is unable to execute a steady secondary task regardless of the in-range posture or the out-of-range posture and whether the driver is awake. The level 3 is basically unavailable for a long period of time for continuous leaving the steering operation. This is because it is difficult to continuously monitor/pay attention to the autonomous running state in a state in which the driver is always requested to return without driver's direct intervention in steering for driving for long time in this case. If the use of the level 3 continues for time equal to or longer than certain time, it is desirable to adopt a use form for intermittently requesting the driver to return and intermittently applying a change.

At the level 4, various secondary tasks can be executed regardless of the in-range posture or the out-of-range posture and whether the driver is awake.

At the level 3 or higher, a secondary task for short time only from which the driver can return at early timing can be executed if the driver is in the in-range posture and is awake. As described above, it is not supposed that the level 3 is used in the autonomous driving without the driver's intervention for long time. In this case, the level 3 is used on the premise that the driver repeatedly and continuously confirm monitoring of the situation on regular basis even if the driver is distracted from driving. Therefore, in a case in which the driver falls asleep or is intent on video watching or game playing and return delay occurs, a penalty is imposed on the driver for the delay, thereby making it possible to suppress occurrence of distraction.

At the level 2 or higher, the driver can execute a secondary task for short time only if the driver is awake with the out-of-range posture (lost posture to an extent that the driver can return to driving in short time in a range of limited lost postures). In the section in which certain safety driving is guaranteed although complete autonomous driving is not guaranteed, it can be supposed that all types of conventionally prohibited operations such as the operation on the navigation system can be carried out within the range of secondary tasks with the posture slightly lost.

At the level 3 or lower, the driver is unable to execute a secondary task even if the secondary task is for short time only in the out-of-range posture, regardless of whether the driver is awake.

With reference back to FIG. 8, in Step S13, the driving mode switching control section 154 determines whether the situation has changed as described with reference to FIGS. 10 to 12, on the basis of (the update information about) the LDM and the driver state detected by the driving state detection section 142.

In a case in which it is determined in Step S13 that the situation has changed, the process goes to Step S14.

In Step S14, the driving mode switching control section 154 resets (changes) the notification timing. The driving mode switching control section 154 also resets the LDM and a frequency of driver's confirmation as appropriate.

On the other hand, in the case of determining in Step S13 that the situation has not changed, the process in Step S14 is skipped.

In Step S15, the driving mode switching control section 154 determines whether current time is certain time before the set notification timing.

The certain time defined herein indicates return time estimated from steady observation by unique learning required for the driver to return to the manual driving, and is predicted time at which the manual driving can be normally performed with a certain success probability. A learning scheme will not be described in detail in the present specification.

Time required since the driver receives the notification necessary for change until actual change is normally completed varies depending on the individual driver and also depends on the posture state and behaviors and the like taken so far.

Therefore, setting the certain time necessary to achieve a set target change success rate on the basis of a statistical return characteristic distribution of the driver population if it is impossible to grasp the return characteristics of this driver, or in response to desirably 100% or a target change success rate if 100% is impossible as the notification time, and notifying the driver at the notification time make it possible to ensure the success rate, so that the driving subject can be normally changed to the driver. The certain time is limit notification extension timing applied to the driver for ensuring this certain success rate.

In a case in which it is determined in Step S15 that the current time is the certain time before the notification timing, the process returns to Step S10 and subsequent processes are repeated.

Here, a reason for steadily observing the notification timing at a low frequency and switching over to high-frequency detection with the situation change is as follows. With a failure of the steady observation, the driver or user normally executing only the secondary task with which the driver can return to the manual driving right after wake-up feels drowsy with passage of time and possibly transitions into a state of leaving the driver's seat such as deeper sleep.

In this case, even if the driver has usually a sufficient extension of time period by the last notification, a case in which the driver further falls asleep and the situation is changed to that in which the driver is notified earlier than initially planned possibly occurs. To avoid the situation accompanied by these temporal changes, regular and steady monitoring and sampling are performed at long time intervals. Furthermore, a frequency of sampling is changed for the purpose of improving the accuracy of change timing and preventing a delay by performing high frequency sampling with the higher frequency of sampling as the point of change is closer.

While it is assumed that the frequency of sampling is specified in the present embodiment, high-sensitivity detection means and sensitive detection means may be combined in detecting changes from observation of the driver's ordinary posture and steady biological signals to observe changes in the driver, and event-driven notification timing re-calculation may be performed to detect the changes. Furthermore, the driver may be notified of the situation of some sort and may recognize the notification on regular basis depending on the content of the secondary task.

On the other hand, in the case of determining in Step S15 that current time is the certain time before the notification timing, the process goes to Step S16.

In Step S16, the driving mode switching control section 154 resets a frequency of confirmation of the LDM and the driver to a higher frequency than before.

In Step S17, the driving mode switching control section 154 determines whether current time is the notification timing. For example, it is determined that the current time is the notification timing when the vehicle passes through the planned change start point.

In a case in which it is determined in Step S17 that current time is not the notification timing, the process goes to Step S18.

In Step S18, the route setting section 151 determines whether the vehicle has arrived at the set destination.

In a case in which it is determined in Step S18 that the vehicle has not arrived at the destination, the process returns to Step S10 and the subsequent processes are repeated.

On the other hand, in the case of determining in Step S18 that the vehicle has arrived at the destination, the autonomous driving process starts an end procedure.

In a case in which it is determined in Step S17 that current time is the notification timing, the process goes to Step S19 (FIG. 9).

In Step S19, the driving mode switching control section 154 determines whether the driver is in an awakening decline state. This determination is based on the reactivity and the degree of awakening of the driver detected by the driving state detection section 142.

For example, in a case in which the reactivity and the degree of awakening of the driver are lower than values set as thresholds in advance, the driver is determined in the awakening decline state. In a case in which the reactivity and the degree of awakening of the driver are higher than the values set as the thresholds in advance, the driver is determined not in the awakening decline state.

As the thresholds mentioned herein, fixed values uniquely defined for the driver population may be used. In that case, some drivers hurry to immediately return in response to individual characteristics, while other drivers take time to return. Therefore, to improve the accuracy in accordance with the return characteristics unique to each driver, learning characteristics unique to the driver in response to observation values with which the driver state can be observed may be learned in advance (regularly) and defined.

In a case in which it is difficult for the driver to specify the thresholds, statistical values based on the population of ordinary drivers necessary for return may be used. It is required to notify every driver early to ensure safe change of the driving mode. However, steadily repeating the notifications several or several ten minutes earlier possibly reduces risk awareness of the need of return for the notification to the driver and causes a risk of negligence of the return; thus, to determine the early notification timing may be not so desirable.

In a case in which it is determined in Step S19 that the driver is in the awakening decline state, the process goes to Step S20.

In Step S20, the driving mode switching control section 154 causes notification to be made to the driver that the driving mode is switched over to the manual driving mode. The notification that the driving mode is switched over to the manual driving mode is to notify the driver that the autonomous driving mode is switched over to the manual driving mode, and the notification is issued under control of, for example, the notification control section 124.

For example, the display section 29 displays a notification screen or the like for attention calling within the field of vision of the driver under control of the notification control section 124. In a case in which the driver is operating the mobile terminal 12, the notification screen or the like may be displayed on the screen of the mobile terminal 12.

At this time, control may be exercised in such a manner that the mobile terminal 12 is transitioned into a standby state or the screen of the mobile terminal 12 is forcibly turned off such that a state of operating can be forcibly stored and the operation can be resumed from the same state. It is thereby possible to prevent the driver from operating the mobile terminal 12 in a hurry in response to display of the notification screen.

The driver may be notified that the driving mode is switched over to the manual driving mode by a method other than the screen display.

For example, the audio output section 30 may output a voice message, an alarm, a buzzer, a beep sound, a pseudo-car horn (klaxon) from the following vehicle that is audible only in the cabin, or the like under control of the notification control section 124.

Alternatively, the light-emitting section 31 may put on or blink a light or the like under control of the notification control section 124.

The vehicle-mounted device control section 34 may perform haptic feedback such as vibration of the driver's seat or the steering wheel or pulling of a seat belt under control of the notification control section 124. It is noted that a similar vibration to that generated when the vehicle crosses the rumble strip or the road stud may be propagated to the driver by vibrating the seat.

The similar vibration to that generated when the vehicle crosses the rumble strip or the road stud may be propagated to the driver by control over the steering wheel by the running control section 33.

In Step S21, the driving mode switching control section 154 controls the switching determination section 155 to perform a driving mode switching determination process. In the driving mode switching determination process, each of the gesture recognition switching determination section 201 the saccade information switching determination section 202, the voice recognition switching determination section 203, and the response-to-active-reaction detection switching determination section 204 determines whether the driving mode can be switched. The driving mode switching determination process in Step S21 will be described later with reference to a flowchart of FIG. 14.

In Step S22, the switching determination section 155 determines whether the autonomous driving mode can be switched to the manual driving mode on the basis of the determination results by the determination sections that configure the switching determination section 155.

In a case in which it is determined in Step S22 that the autonomous driving mode can be switched to the manual driving mode, the process goes to Step S23.

In Step S23, the driving mode switching control section 154 switches the autonomous driving mode to the manual driving mode and switches over a state into a state of control by the driver as the subject that is a state in which the driver takes the initiative in driving, and the autonomous driving control process is then finished.

On the other hand, in a case in which it is determined in Step S19 that the driver is in the awakening decline state, the process goes to Step S24.

In Step S24, the driving mode switching control section 154 controls the notification control section 124 to issue warning for awakening. For example, the notification control section 124 outputs a loud sound, strong vibration, or the like to awaken a person as the warning.

The warning output in Step S24 is different from and more powerful than the notification output in Step S20. For example, the voice message, the alarm, the buzzer, the beep sound, the pseudo-klaxon, or the like is output with a larger volume than that of the notification. Furthermore, a tone such as a dissonance more unpleasant than that of the notification is output. The light or the like may emit light at a higher emission intensity than that of the notification, or the haptic feedback may be performed at a higher intensity than that of the notification.

In Step S25, the driving mode switching control section 154 determines whether a driver's return-to-confirmation posture has been confirmed. For example, in a case in which it is identified that the driver is to take the same posture as a posture at normal time on the basis of the detection result of the degree of awakening by the driving state detection section 142, it is determined that the return-to-awakening posture has been able to be confirmed. A system that permits a posture movement or work apart from the seat may include a device that determines a movement of a posture/balance movement of the driver in the vehicle by tracking and may perform the determination.

In a case in which it is determined in Step S25 that a driver's return-to-awakening posture has not been confirmed, the process goes to Step S26.

In Step S26, the driving mode switching control section 154 refers to an incorporated timer and determines whether predetermined extension of time period for completion of change has elapsed since, for example, the notification timing.

In a case in which it is determined in Step S26 that predetermined time has not elapsed, the process returns to Step S24 and subsequent processes are repeated. The predetermined elapsed time is, for example, time permitted to awake the driver who is asleep until the driver is awake. The predetermined elapsed time is set longer for the authenticated driver who wakes up in a bad mood, and set shorter for the driver who wakes up in a good mood, and is the time set as individual information.

On the other hand, in a case in which it is determined in Step S26 that the predetermined time has elapsed, then the driving mode switching control section 154 abandons work for driver's return to awakening, and the process goes to Step S27. Likewise, in a case in which it is not determined in Step S22 that the autonomous driving mode can be switched to the manual driving mode, the process goes to Step S27.

In Step S27, the log generation section 125 records NG for switching to the manual driving mode. For example, the log generation section 125 generates a log that represents that switching to the manual driving mode is unsuccessful and records the log.

In Step S28, the driving mode switching control section 154 activates and executes the emergency evacuation mode. Executing the emergency evacuation mode enables control to, for example, decelerate and slow down the vehicle driven by the driver to move to a side strip in the light of a surrounding situation of the running road and to urgently evacuate the vehicle to a road shoulder or the like. It is noted, however, that stopping on the road shoulder is not a preferable use form even in an emergency. Desirably, the vehicle is moved to a position which can serve as a point that does not obstruct transportation and to which the vehicle can be evacuated and then parked. The reason is as follows. If the autonomous driving become widespread and a sluggish stream of vehicles occurs to accompany the occurrence of traffic congestion or the like, all traffic lanes are filled with autonomous driving vehicles to disturb passing of emergency vehicles; thus, it is quite important to make the road shoulder vacant for normal operation of the transportation infrastructure.

In this way, the process for forcibly stopping the vehicle is performed in the emergency evacuation mode. In an emergency, the route setting section 151, for example, searches a nearest forced stopping location on the running route on the basis of the map information and a process for stopping the vehicle at the searched forced stopping location is performed. Examples of the searched forced stopping location include an emergency parking bay, a traffic island, and parking lots of shops. The reason for urgently stopping the vehicle in the light of the surrounding situation of the running road is as follows. If the vehicle is slowed down and urgently stopped on a single traffic lane in a time zone in which traffic is heavy in the single traffic lane without the road shoulder, this causes traffic congestion on the road.

In a non-emergency, the route setting section 151 may search a nearest parking lot or service area on the basis of the map information. In a case in which a parking lot or a service area is present within a predetermined range and the vehicle can arrive at the lot or area without via a route on which the manual driving is requested, the route setting section 151 sets the parking lot or service area to the forced stopping location. In a case in which a parking lot or a service area is not present within the predetermined range or in a case in which the vehicle is unable to arrive at the parking lot or the service area without via the route on which the manual driving is requested, then the route setting section 151 may search and set a forced stopping location by a similar method to a method used in an emergency.

The driving assist control section 153 controls the running control section 33 or the like to stop the vehicle at the set forced stopping location. At this time, the vehicle is decelerated or slowed down as needed. Furthermore, a sudden deterioration in a driver's disease condition occurs as a factor for preventing the driver from return, an SOS may be sent out at a time of detection or after the vehicle is stopped along with an event notification.

It is also supposed that the driver forcibly switches the driving mode to the manual driving and forcibly return to the driving before the vehicle is automatically stopped at the forced stopping location. In this case, the driving mode may be switched over to the manual driving step by step since there is a probability that the driver is not sufficiently awake.

Next, the driving mode switching determination process performed in Step S21 of FIG. 9 will be described with reference to a flowchart of FIG. 14.

In Step S101, the gesture recognition switching determination section 201 causes the driving state detection section 142 to detect the reactivity and the degree of awakening using the gesture recognition.

The gesture recognition switching determination section 201 determines whether the driving mode can be switched over from the autonomous driving mode to the manual driving mode by determining the return internal state of the driver on the basis of the detection result by the driving state detection section 142.

In Step S102, the saccade information switching determination section 202 causes the driving state detection section 142 to detect the reactivity and the degree of awakening of the driver by performing analysis of driver's eyeball behaviors, for example, saccade analysis.

The saccade information switching determination section 202 determines whether the driving mode can be switched from the autonomous driving mode to the manual driving mode by determining the return internal state of the driver on the basis of the detection result by the driving state detection section 142.

In Step S103, the driving state detection section 142 is caused to recognize a driver's response by a voice and to detect the reactivity and the degree of awakening of the driver.

The voice recognition switching determination section 203 determines whether the driving mode can be switched from the autonomous driving mode to the manual driving mode by determining the return internal state of the driver on the basis of the detection result by the driving state detection section 142.

In Step S104, the response-to-active-reaction detection switching determination section 204 causes the driving state detection section 142 to detect the reactivity and the degree of awakening of the driver on the basis of a driver's response to the active reaction.

The response-to-active-reaction detection switching determination section 204 determines whether the driving mode can be switched from the autonomous driving mode to the manual driving mode by determining the return internal state of the driver on the basis of the detection result by the driving state detection section 142 and a reaction result appearing as the driver's cognitive response to an action acting on driving.

It is noted that the switching determination process from the autonomous driving mode to the manual driving mode is not limited to a process performed via these four stages of determination processes. For example, another determination process may be performed as an alternative to the four determination processes depicted in FIG. 14 or a determination process may be added.

Furthermore, an order of the four determination processes depicted in FIG. 14 can be change arbitrarily. An advantage of acting on the driver will be described herein. Here, as for effects acting on the driver, in the case of detection dependent on observation of cognitive judgment simply dependent on driver's passive means, no peculiar feature appears by passive observation of the driver in road sections to which the driver does not need to pay special attention because of the monotonous road whereby it is difficult to determine the return-to-awakening state. On the other hand, actively acting on the driver from the vehicle control system 11 makes it advantageously possible to make more obvious the discrimination of observable state observation values necessary to determine the return to awakening.

The determination as to whether the driving mode can be switched in Step S22 of FIG. 9 may be performed on the basis of all the determination results of the four determination processes depicted in FIG. 14, or may be performed on the basis of the determination result of at least any one of the determination processes.

### <Autonomous driving control process>

Another example of the autonomous driving control process executed by the vehicle control system 11 will next be described with reference to flowcharts of FIGS. 15 to 17.

Since processes from Steps S201 to S209 in FIG. 15 are similar to those from Steps S1 to S9 in FIG. 7, description thereof will be omitted. Repetitive description will be omitted, as appropriate.

In Step S201, driver authentication is performed, and in Step S202, log recording is started. In Step S203, the destination is acquired, and in Step S204, the acquisition of the surrounding information is started.

In Step S205, the setting of the running route is started, and in Step S206, the update of the autonomous level is started. In Step S207, monitoring of the driver is started, and in Step S208, the learning process is started. In addition, in Step S209, the driving assist is started.

In Step S210 of FIG. 16, the driving mode switching control section 154 monitors necessity to return to the manual driving on the basis of the LDM, the traffic information, and the like acquired via the communication section 27. It is noted that switching from the autonomous driving mode to the manual driving mode is the same meaning as return to the manual driving. The switching (switchover) from the autonomous driving mode to the manual driving mode will be referred to as "return to the manual driving," hereinafter as appropriate.

In a case in which the situation has changed as described with reference to FIGS. 10 to 12, for example, during monitoring of the necessity to return to the manual driving, the driving mode switching control section 154 makes resetting of the planned change start points and the like.

In Step S211, the driving mode switching control section 154 determines whether it is necessary to return to the manual driving.

In a case in which it is determined in Step S211 that it is unnecessary to return to the manual driving, the process returns to Step S210 and subsequent processes are repeated.

On the other hand, in a case in which it is determined in Step S211 that it is necessary to return to the manual driving, the process goes to Step S212.

In Step S212, the driving mode switching control section 154 controls the notification control section 124 to notify the driver of the necessity to return to the manual driving. The notification issued herein is the notification of the switchover to the manual driving mode similar to the notification in Step S20 of FIG. 9.

In a case in which it cannot be expected that the driver returns to awakening depending on the notification of the necessity to return, similar warning to that in Step S24 of FIG. 9 may be repeated a predetermined number of times.

In Step S213, the driving mode switching control section 154 determines whether the driver can be expected to return to awakening.

For example, the determination sections in the switching determination section 155 may determine whether the driving mode can be switched, and the driving mode switching control section 154 may determine whether the driver can be expected to return to awakening on the basis of the determination results by the determination sections. It is noted that the determination as to whether the driver can be expected to return to awakening may be performed on the basis of the determination result of at least any one of the four determination processes.

In a case in which it is determined in Step S213 that the driver can be expected to return to awakening, the process goes to Step S214.

In Step S214, the driving mode switching control section 154 starts a driving return procedure to control the driving state detection section 142 to perform driving posture return sequence tracking that is tracking of posture return. The driving posture return sequence tracking is a motion of tracking a sequence in response to whether the driver is seated at the time of the secondary task and until the driver's posture returns to the posture in which the driver can drive the vehicle.

In Step S215, the driving mode switching control section 154 monitors return to the posture that enables driving. As the monitoring of the return to the posture that enables driving, monitoring is performed on the basis of driver's movements such as the transition of the direction of the face, the transition of the direction of the line of vision, the frequency of blinks, and the transition of eyeball movements, and the reactivity and the degree of awakening of the driver are detected.

In Step S216, the driving mode switching control section 154 determines whether a probability of driver's starting the steering operation using the running operating device has been detected on the basis of a result of the return monitoring in Step S215.

In a case in which it is determined in s¥Step S216 that a probability of driver's starting the steering operation using the running operating device has been detected, the process goes to Step S218 of FIG. 17.

In a case in which it is not determined in Step S213 that the driver can be expected to return to awakening, or in a case in which it is not determined in Step S216 that a probability of driver's starting the steering operation using the running operating device can be detected, the process goes to Step S217.

In Step S217, the driving mode switching control section 154 activates and executes the emergency evacuation mode similarly to Step S28 of FIG. 9. Executing the emergency evacuation mode causes the vehicle to be forcibly stopped, and the autonomous driving control process is then finished.

In Steps S218 to S220 of FIG. 17, a switching process by response-to-active-reaction detection is performed.

In other words, in Step S218, the response-to-active-reaction detection switching determination section 204 causes the running control section 33 to exercise control over a sensible deviation such as the noise running, from normal running. The sensible deviation control includes control to apply a torque to the steering wheel, control over an intentional steering operation error, control over zigzag steering operation, control over quick acceleration/deceleration, and the like.

It is noted that the sensible deviation control is desirably control without applying a sense of control lost. For example, it is desirable to keep down the deviation within a range within which an instantaneous deviation is applied to the steering wheel to such an extent that the steering wheel slightly slips out of the driver's hands by sidewinds or overriding a hole on the road surface.

In Step S219, the response-to-active-reaction detection switching determination section 204 causes the driving state detection section 142 to monitor a driver's correction operation to the sensible deviation control over the noise running or the like. Monitoring the correction operation makes it possible to detect, for example, that the driver can correctly send a response to the active reaction to cancel the noise running.

In Step S220, the response-to-active-reaction detection switching determination section 204 evaluates the driver state on the basis of the detection result by the driving state detection section 142. The response-to-active-reaction detection switching determination section 204 evaluates herein whether the driver can return to a state in which the driver can normally perform the steering operation.

In Step S221, the response-to-active-reaction detection switching determination section 204 determines whether the driver has returned to the state in which the driver can normally perform the steering operation on the basis of an evaluation result in Step S220.

In a case in which it is determined in Step S221 that the driver has returned to the state in which the driver can normally perform the steering operation, the process goes to Step S222.

In Step S222, the driving mode switching control section 154 hands over authority of the normal steering operation to the driver stepwise. In other words, the driving mode switching control section 154 switches the driving mode from the autonomous driving mode to the manual driving mode stepwise.

It is noted that the driver possibly performs the steering operation in a sleepwalking state or possibly performs the steering operation reflexively in a hurry even if the driver's steering operation is detected. Therefore, it is desirable not to hand over the authority at a time but to hand over the authority stepwise by giving a weight to control over the deviating running from the running step by step or applying a load of a strong reaction force torque to the steering wheel when the steering wheel rotates in accordance with the driver's intention.

In Step S223, the driving mode switching control section 154 determines whether the driving/steering operation corresponding to steady manual driving is performed by continuously viewing the detection result of the reactivity and the degree of awakening of the driver by the driving state detection section 142. It is desirable herein that the driving/steering operation corresponding to the steady manual driving is determined with reference to driving motion characteristics when the driver drives the vehicle by ordinary manual driving.

In a case in which it is determined in Step S223 that the driving/steering operation corresponding to the steady manual driving is performed, the autonomous driving control process is finished.

On the other hand, in a case in which it is determined in Step S221 that the driver has returned to the state in which the driver can normally perform the steering operation, or in a case in which it is determined in Step S223 that the driving/steering operation corresponding to the steady manual driving is not performed, the process returns to Step S217 of FIG 16 and subsequent processes are repeated.

As described above, in the present technique, the control is intentionally exercised to cause the driver to feel the necessity of the steering operation correction operation as a final-step process in the procedure for determining the return internal state of the driver using the detection result of the degree of awakening and the like.

In addition, it is determined whether the driver's consciousness returns to such an extent that the driver has a normal steering ability to perform a steering operation on the device with a muscle strength on the basis of a response to such control, and then the driving mode is switched from the autonomous driving mode to the manual driving mode; thus, it is possible to more safely change the autonomous driving to the manual driving.

Moreover, confirmation by the gesture, confirmation by the line-of-vision movement tracking, confirmation by the voice recognition, and the like are performed in sequence, thereby making it possible to accurately determine the driver's return ability and to eventually, more reliably change the autonomous driving mode to the manual driving mode.

Thus, it is possible to switch from the autonomous driving to the manual driving more safely.

It is noted that the vehicle control system 11 may achieve improvement in accuracy for confirming an autonomous self-position to correct a relative position to the environment and yet create correction data about the acquired map data using such a technique as SLAM (Simultaneous Localization and Mapping).

The present technique is described on the basis of classification of the autonomous driving level at which the vehicle can run in response to the road environment into the level 0 at which the use of the autonomous driving is not permitted and the levels at which the autonomous driving is permitted and which include the level at which the driver's intervention is required, the more advanced autonomous driving level 4, and the level 5.

On the other hand, in a case in which the vehicle control system 11 interprets the autonomous driving on the premise of the use in running at the low speed although the low-speed autonomous driving is not permitted yet under the present Road Traffic Law, it is not always essential to carry out recognition and determination and running planning such as running environmental situation recognition and short-term path planning for compensating for multiple principal risks necessary for normal high-speed safety running, which are currently widely discussed. Furthermore, in the case of supposing an autonomous/fully automatic driving vehicle with running limited to low-speed running as an ultra-lightweight vehicle that is regarded as an intermediate between a low-speed driving vehicle, introduction of which progress after deregulations, and a light vehicle subjected to existing/conventional type approval, it is highly advantageous to enable such a vehicle to be used in low-speed autonomous driving.

In other words, in the case of supposing the use of the vehicle with the speed limited to low speed and the autonomous driving system is unable to make short-term determination, the system may take time to grasp a situation necessary to travel the vehicle while intentionally delaying arrival time at a critical point by stopping the vehicle using a time axis and decelerating the vehicle. If the speed is further lower, then the system may take time in judgment of a running path as a result, and it is possible to compensate for the low speed by decelerating and traveling the vehicle. In other words, even if the map information corresponding to an "invisible trajectory" called LDM necessary for the conventional higher-speed autonomous running and always updated is poor, it is possible to safely run the vehicle by limiting the use to low-speed use.

It is noted that the critical point indicates a final change point on a map at which change of driving is to be completed by, for example, the information such as the LDM acquired in advance. The critical point is a point that possibly induces a hazard in a case in which the driver is requested to return to the manual driving at timing at which the vehicle passes through the point or the return to the manual driving is required in response to a request from the vehicle control system 11 and dealing with the manual driving is impossible.

The point does not always, directly involve a hazard in the case in which the driver has not returned to the manual driving yet, depending on factors for which the vehicle control system 11 requests the driver to perform the manual driving. The critical point is the point at which the vehicle control system 11 confirms whether the driver is completed with return to the manual driving since a hazard or some kind of event, for which it is impossible to determine the situation, occurs.

The critical point is the point determined by the vehicle control system 11 since the vehicle control system 11 is unable to make determination or the vehicle control system 11 is uncertain about the autonomous driving at an ordinary cruse speed. Therefore, when the vehicle passes through the critical point, there are actually many cases in which the driver does not recognize the necessity to return the subject vehicle to the manual driving before passing through the point.

Owing to this, careless driver's negligence of the change of the driving mode frequently occurs at the critical point; thus, in a case in which a hazardous event that is actually beyond determination of the vehicle control system 11 occurs in combination with a situation that incidentally happens, the event contains a risk that may eventually induce a critical accident. Therefore, the critical point may be used as a criterion point for imposing a penalty to the driver when the change delays or the start of the change delays for preventing the driver from neglect the change of the driving mode when it is impossible to confirm the driver's change of the driving mode at the critical point.

On the other hand, it is inappropriate to use the autonomous driving system available only at the low speed as it is in the expressway environment in a mixture of a high-speed running environment and a low-speed running environment because of presence of many obstructive factors, such as occurrence of traffic congestion on the road infrastructure, to an infrastructure function.

In other words, safe moving and running of the low-speed-dedicated autonomous driving vehicle can be realized even with a more limited surrounding recognition function. While applying the low-speed-dedicated autonomous driving vehicle to high-speed driving as it is requires a high-speed process such as selection of an optimum failure avoidance route path, it is difficult for the autonomous driving vehicle to pass through a route on which the vehicle is required to run at high speed. This is because the autonomous driving vehicle is unable to perform remote recognition and high-speed process determination necessary for safe autonomous driving.

To address the problem, the use of the autonomous driving is permitted with the speed limited to the low speed regardless of the manual driving ability of the driver at the low speed. Moreover, a case in which the vehicle is permitted to pass through a higher-speed running section at the autonomous driving level 3 or 2 by increasing a running speed only if the driver who desires to pass through a section at a speed equal to or higher than a certain speed returns to intervention in driving for the manual driving may be conceivable. This enables more practical use of the same moving means and guarantees safety, and is further advantageous in the prevention of occurrence of traffic congestion or the like resulting from the entry of the low-speed vehicle on the road infrastructure.

In other words, while the present technique mainly focuses attention on determination of the driver's ability to return to the manual driving when the driver switches the driving mode from the autonomous driving mode to the manual driving mode as appropriate per road sections varying moment by moment depending on the running section, the present technique may be extensively used in determining a driver's ability to return to the manual driving in a case in which the vehicle in a form in which the autonomous driving is permitted at the low speed moves at a high speed.

While an example of a configuration of a principal embodiment for confirming a driver's active reaction to control is described above, the configuration may have a function other than the control to specifically and directly apply the noise running to the very running of the vehicle. For example, a visual effect may be used by the Virtual Reality effect or the like, pseudo-rotation and a pseudo-torque of the steering may be generated by separating the steering from the vehicle control, or a sense of rotation may be added by a tactile scheme relying on vibration without rotating the steering.

The present technique is applicable to every kind of vehicle capable of automating at least part of driving, irrespective of a power source and an energy supply source of the vehicle. For example, the present technique is applicable to a gasoline-powered vehicle, a hybrid vehicle, a plug-in hybrid vehicle, an electric-powered vehicle, a fuel cell vehicle, and the like. The present technique is also applicable to a bus, a truck, a two-wheeled vehicle, and the like other than ordinary automobiles. The present technique exhibits greater advantages particularly in the case of being applied to a vehicle of every kind capable of switching driving between autonomous/automatic driving and manual driving.

### <Example of configuration of computer>

A series of processes described above can be executed by hardware or by software. When the series of processes are executed by the software, a program configuring the software is installed into a computer. Here, types of the computer include a computer incorporated into dedicated hardware, and a computer which is, for example, a general-purpose personal computer capable of executing various functions by installing various programs into the computer.

FIG. 18 is a block diagram depicting an example of a configuration of the hardware of the computer for causing the series of processes described above to be executed by the program.

In the computer, a CPU (Central Processing Unit) 401, a ROM (Read Only Memory) 402, and a RAM (Random Access Memory) 403 are mutually connected by a bus 404.

An input/output interface 405 is also connected to the bus 404. An input section 406, an output section 407, a recording section 408, a communication section 409, and a drive 410 are connected to the input/output interface 405.

The input section 406 includes an input switch, buttons, a microphone, an imaging element, and the like. The output section 407 includes a display, a speaker, and the like. The recording section 408 includes a hard disc, a nonvolatile memory, and the like. The communication section 409 includes a network interface and the like. The drive 410 drives a removable medium 411 such as a magnetic disk, an optical disk, a magneto-optical disk or a semiconductor memory.

In the computer configured as described above, the CPU 401 loads a program recorded in, for example, the recording section 408 to the RAM 403 via the input/output interface 405 and the bus 404 and executes the program, whereby the series of processes described above are performed.

The program executed by the computer (CPU 401) can be provided by, for example, recording the program in the removable medium 411 serving as a package medium or the like. Alternatively, the program can be provided via a wired or wireless transmission medium such as a local area network, the Internet, or a digital satellite service.

In the computer, the program can be installed into the recording section 408 via the input/output interface 405 by attaching the removable medium 411 to the drive 410. Alternatively, the program can be received by the communication section 409 via the wired or wireless transmission medium and installed into the recording section 408. In another alternative, the program can be installed into the ROM 402 or the recording section 408 in advance.

The program executed by the computer may be a program for performing processes in time series in an order described in the present specification or may be a program for performing the processes either in parallel or at necessary timing such as timing of calling.

Moreover, the embodiments of the present technique are not limited to the embodiments described above and various changes and modifications can be made without departing from the spirit of the present technique.

For example, the present technique can adopt a cloud computing configuration for causing a plurality of apparatuses to process one function in a sharing or cooperative fashion.

Furthermore, each step described in the above flowcharts can be not only executed by one apparatus but also executed by a plurality of apparatuses in a sharing fashion.

Moreover, in a case in which one step includes a plurality of processes, the plurality of processes included in the one step can be not only executed by one apparatus but also executed by a plurality of apparatuses in a sharing fashion.

### <Example of combination of configurations>

The present technique can be configured as follows.
(1) A vehicle controller including:
   a running control section exercising control over deviating running from normal running of a vehicle at a time of switching a driving mode from an autonomous driving mode to a manual driving mode; and
   a driving state detection section detecting a driving state of a driver on the basis of a running operation performed by the driver on the control over the deviating running.
(2) The vehicle controller according to (1), further including:
   a driving mode switching section switching the driving mode in response to the driving state detected by the driving state detection section.
(3) The vehicle controller according to (2), in which
   the driving mode switching section switches the driving mode from the autonomous driving mode to the manual driving mode in a case in which the driving state detected by the driving state detection section represents that the normal running is possible.
(4) The vehicle controller according to any one of (1) to (3), in which
   the running control section exercises the control over the deviating running as a final step or a process conformant to the final step among a plurality of determination processes performed stepwise at the time of switching the driving mode.
(5) The vehicle controller according to any one of (1) to (4), in which
   the running control section exercises control over running to move the vehicle to a direction deviating from a traveling direction as the control over the deviating running.
(6) The vehicle controller according to (5), in which
   the running control section exercises control over running to move the vehicle to a right angle direction as the deviating direction.
(7) The vehicle controller according to any one of (1) to (6), in which
   the running control section exercises control over running to quickly accelerate or decelerate the vehicle as the control over the deviating running.
(8) The vehicle controller according to any one of (1) to (7), in which
   the running control section exercises the control over the deviating running after the driver is notified that the driving mode is switched.
(9) The vehicle controller according to any one of (1) to (8), in which
   the driving state detection section passively detects the driving state of the driver before the running control section exercises the control over the deviating running.
(10) The vehicle controller according to any one of (1) to (9), in which
   the driving state detection section passively or quasi-passively detects the driving state of the driver before the running control section exercises the control over the deviating running, and
   the running control section determines timing of notifying the driver on the basis of a state of the driver and return prediction timing.
(11) The vehicle controller according to any one of (1) to (10), in which
   the driving state detection section detects the driving state on the basis of a correction action performed on a running operating device by the driver.
(12) The vehicle controller according to any one of (1) to (11), in which
   the driving state detection section detects, as the driving state, at least one of a reactivity or a degree of awakening of the driver.
(13) The vehicle controller according to any one of (1) to (11), in which
   the running control section permits the autonomous driving mode of the vehicle with a speed limited to a low speed, determines whether to switch the driving mode from autonomous driving to manual driving at a time of switchover to running at a speed equal to or higher than a predetermined speed, and requests the driver to intervene in steering operation at a time of running at the speed equal to or higher than the predetermined speed.
(14) A vehicle control method including the steps of:
   exercising control over deviating running from normal running of a vehicle at a time of switching a driving mode from an autonomous driving mode to a manual driving mode; and
   detecting a driving state of a driver on the basis of a running operation performed by the driver on the control over the deviating running.

### [Reference Signs List]

10: Autonomous driving system
11: Vehicle control system
12: Mobile terminal
21: Surrounding image capturing section
22: Surrounding information acquisition section
23: Position measuring section
24: Input section
25: Vehicle information acquisition section
26: Driver monitoring section
27: Communication section
28: Vehicle control section
29: Display section
30: Audio output section
31: Light-emitting section
33: Running control section
34: Vehicle-mounted device control section
35: Storage section
101: Driver image capturing section
102: Biological information acquisition section
103: Line-of-vision detection section
104: Authentication section
121: Surrounding monitoring section
122: Driver monitoring section
123: Autonomous driving control section
124: Notification control section
125: Log generation section
126: Learning section
141: Driving behavior analysis section
142: Driver state detection section
151: Route setting section
152: Autonomous level setting section
153: Driving assist control section
154: Driving mode switching control section
155: Switching determination section
201: Gesture recognition switching determination section
202: Saccade information switching determination section
203: Voice recognition switching determination section
204: Response-to-active-reaction detection switching
determination section

## Claims

1. A vehicle controller comprising:
a running control section exercising control over deviating running from normal running of a vehicle at a time of switching a driving mode from an autonomous driving mode to a manual driving mode; and
a driving state detection section detecting a driving state of a driver on a basis of a running operation performed by the driver on the control over the deviating running.

2. The vehicle controller according to claim 1, further comprising:
a driving mode switching section switching the driving mode in response to the driving state detected by the driving state detection section.

3. The vehicle controller according to claim 2, wherein
the driving mode switching section switches the driving mode from the autonomous driving mode to the manual driving mode in a case in which the driving state detected by the driving state detection section represents that the normal running is possible.

4. The vehicle controller according to claim 1, wherein
the running control section exercises the control over the deviating running as a final step or a process conformant to the final step among a plurality of determination processes performed stepwise at the time of switching the driving mode.

5. The vehicle controller according to claim 1, wherein
the running control section exercises control over running to move the vehicle to a direction deviating from a traveling direction as the control over the deviating running.

6. The vehicle controller according to claim 5, wherein
the running control section exercises control over running to move the vehicle to a right angle direction as the deviating direction.

7. The vehicle controller according to claim 1, wherein
the running control section exercises control over running to quickly accelerate or decelerate the vehicle as the control over the deviating running.

8. The vehicle controller according to claim 1, wherein
the running control section exercises the control over the deviating running after the driver is notified that the driving mode is switched.

9. The vehicle controller according to claim 1, wherein
the driving state detection section passively detects the driving state of the driver before the running control section exercises the control over the deviating running.

10. The vehicle controller according to claim 1, wherein
the driving state detection section passively or quasi-passively detects the driving state of the driver before the running control section exercises the control over the deviating running, and
the running control section determines timing of notifying the driver on a basis of a state of the driver and return prediction timing.

11. The vehicle controller according to claim 1, wherein
the driving state detection section detects the driving state on a basis of a correction action performed on a running operating device by the driver.

12. The vehicle controller according to claim 1, wherein
the driving state detection section detects, as the driving state, at least one of a reactivity or a degree of awakening of the driver.

13. The vehicle controller according to claim 1, wherein
the running control section permits the autonomous driving mode of the vehicle with a speed limited to a low speed, determines whether to switch the driving mode from autonomous driving to manual driving at a time of switchover to running at a speed equal to or higher than a predetermined speed, and requests the driver to intervene in steering operation at a time of running at the speed equal to or higher than the predetermined speed.

14. A vehicle control method comprising the steps of:
exercising control over deviating running from normal running of a vehicle at a time of switching a driving mode from an autonomous driving mode to a manual driving mode; and
detecting a driving state of a driver on a basis of a running operation performed by the driver on the control over the deviating running.
